(19) Europäisches Patentamt
European Patent Office
Office européen des brevets

(11) **EP 4 716 262 A1**

(12) **EUROPEAN PATENT APPLICATION**
published in accordance with Art. 153(4) EPC

(43) Date of publication:
**25.03.2026 Bulletin 2026/13**

(21) Application number: **23941911.2**

(22) Date of filing: **20.06.2023**

(51) International Patent Classification (IPC):
*H04W 12/00* (2021.01)    *G01S 13/04* (2006.01)

(52) Cooperative Patent Classification (CPC):
**H04W 12/00; G01S 13/04**

(86) International application number:
**PCT/CN2023/101545**

(87) International publication number:
**WO 2024/259607 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **SUN, Li**
**Shenzhen, Guangdong 518129 (CN)**

• **WANG, Yuwei**
**Shenzhen, Guangdong 518129 (CN)**
• **LIU, Peng**
**Shenzhen, Guangdong 518129 (CN)**
• **WANG, Wenhui**
**Shenzhen, Guangdong 518129 (CN)**
• **ZHANG, Yiyan**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **WIRELESS SENSING METHOD AND APPARATUS**

(57)    A wireless sensing method and apparatus are disclosed, to determine a wireless sensing result through round-trip signal receiving and sending and signal processing. The method includes: A first node outputs a first signal, where the first signal is a signal that has undergone randomization processing. The first node receives a second signal, where the second signal is a fourth signal after channel transmission, the fourth signal includes a signal obtained by transforming a third signal, the fourth signal includes a signal output by a first antenna corresponding to a second node and a signal output by a second antenna corresponding to the second node, and the third signal is the first signal after channel transmission. The first node processes the second signal to determine a wireless sensing result. The method provided in embodiments of this application can protect privacy of authorized users and reduce system overheads, and has low implementation complexity.

FIG. 3

**Description**

**TECHNICAL FIELD**

This application relates to the communication field, and more specifically, to a wireless sensing method and an apparatus.

**BACKGROUND**

Sensing is one of important applications of a 6th generation (6th generation, 6G) mobile communication technology and next-generation wireless connectivity (wireless-fidelity, Wi-Fi). The fundamental principle of sensing is to use radio signals to measure channels, to obtain channel state information (channel state information, CSI) or a channel impulse response (channel impulse response, CIR), thereby inferring information related to the environment or a sensed object (for example, an object in the environment) based on the channel state information or the channel impulse response. Special "measurement" signals (such as pilots) in wireless systems can be used for sensing, but such signals have a publicly known signal structure, which may lead to privacy exposure. Unauthorized users could potentially eavesdrop the aforementioned measurement signals, and infer positions, trajectories, behavior features, and the like of authorized users. This results in privacy leakage.

Therefore, how to protect user privacy during sensing is an urgent problem to be resolved currently.

**SUMMARY**

Embodiments of this application provide a wireless sensing method and an apparatus, to protect user privacy during sensing.

To achieve the foregoing objective, the following technical solutions are used in this application.

According to a first aspect, a wireless sensing method is provided. The method may be performed by a first node, or may be performed by a component of the first node, for example, a processor, a chip, or a chip system of the first node, or may be implemented by a logic module or software that can implement all or a part of functions of the first node. For example, the method may be performed by the first node. The method includes: The first node outputs a first signal, where the first signal is a signal that has undergone randomization processing. The first node receives a second signal, where the second signal a fourth signal after channel transmission and is received by the first node, the fourth signal includes a signal obtained by transforming a third signal, the third signal is the first signal after channel transmission, and the fourth signal includes a signal output by a first antenna corresponding to a second node and a signal output by a second antenna corresponding to the second node. The first node processes the second signal to determine a wireless sensing result.

Based on this solution, the first signal is randomized, and authorized users do not need to share a randomization parameter, so that unauthorized users cannot obtain the randomization parameter and cannot determine a sensing result. This improves privacy of the authorized user, and reduces overheads caused by parameter sharing. Further, in comparison with a solution of sending a jamming signal, a channel obfuscation solution, or the like, in this solution, the wireless sensing result can be determined based on the second signal received by the first node, only through round-trip signal receiving and sending and signal processing, and an additional device other than the first node and the second node does not need to be added. Therefore, implementation complexity is low. In conclusion, in embodiments of this application, when wireless sensing is performed, privacy of the authorized user can be protected, system overheads can be reduced, and implementation complexity is low.

In a possible implementation, that the first node outputs the first signal includes: The first node jointly sends the first signal to the second node through a plurality of antennas. The first signal includes a first sensing signal flow and a second sensing signal flow, the first sensing signal flow is a random signal flow, and the second sensing signal flow is determined based on the first sensing signal flow and a lowpass function. In this solution, because of a lowpass feature of the lowpass function, the unauthorized users cannot determine the wireless sensing result. This further protects privacy of the authorized user.

Optionally, the fourth signal is obtained by performing conjugate transpose on the third signal. In this solution, processing is performed in time domain, a processing procedure is simple, and implementation complexity is low.

Optionally, the fourth signal is obtained by sequentially performing fast Fourier transform FFT, conjugation, and inverse fast Fourier transform IFFT on the third signal. In this solution, processing is performed in frequency domain, and a signal processing process in an existing communication system also involves FFT and IFFT. Therefore, compatibility is high.

In a possible implementation, a modulus value of the first sensing signal flow is equal to a modulus value of the second sensing signal flow. A modulus of the first sensing signal flow is equal to a modulus of the second sensing signal flow. This ensures sensing precision. For example, because the modulus of the first sensing signal flow is equal to the modulus of the second sensing signal flow, channel estimation performance may be better. In addition, a wireless sensing result is usually determined based on a channel estimation result, and a more accurate wireless sensing result may be obtained based on a better channel estimation result. Therefore, sensing precision can be ensured.

In a possible implementation, that the first node outputs the first signal includes: The first node sends the first signal to the second node through a single antenna, where the first signal is a random signal flow. The first sensing signal flow is a random signal flow. Because the authorized users do not need to share a parameter about the random signal flow, system overheads for parameter sharing are reduced.

Optionally, the third signal includes a fifth signal and a sixth signal, the fourth signal includes a seventh signal and an eighth signal, the seventh signal is obtained by performing conjugate transpose on the fifth signal, and the eighth signal is obtained by sequentially performing conjugate transpose and addition of a time domain offset $n_0$ on the sixth signal, where $n_0$ is a sampling value of a lowpass function in a time unit for sending the first signal, k represents a subcarrier sequence number, and N represents a quantity of subcarriers. In this solution, processing is performed in time domain, a processing procedure is simple, and implementation complexity is low.

Optionally, the third signal includes a fifth signal and a sixth signal, the fourth signal includes a seventh signal and an eighth signal, the seventh signal is obtained by sequentially performing fast Fourier transform FFT, conjugation in frequency domain, and inverse fast Fourier transform IFFT on the fifth signal, and the eighth signal is obtained by sequentially performing fast Fourier transform FFT, conjugation in frequency domain, multiplication by a phase rotation factor $e^{-j\frac{2\pi}{N}kn_0}$, and inverse fast Fourier transform IFFT on the sixth signal, where $n_0$ is a sampling value of a lowpass function in a time unit for sending the first signal, k represents a subcarrier sequence number, and N represents a quantity of subcarriers. In this solution, processing is performed in frequency domain, and a signal processing process in an existing communication system also involves FFT and IFFT. Therefore, compatibility is high.

Optionally, the third signal includes a fifth signal and a sixth signal, the fourth signal includes a seventh signal and an eighth signal, the seventh signal is obtained by estimating a frequency-domain synthetic channel based on the fifth signal and performing conjugation on the fifth signal, and the eighth signal is obtained by estimating a frequency-domain synthetic channel based on the sixth signal and sequentially performing conjugation and multiplication by a rotation factor $e^{-j\frac{2\pi}{N}kn_0}$ on the sixth signal, where $n_0$ is a sampling value of a lowpass function in a time unit for sending the first signal, k represents a subcarrier sequence number, and N represents a quantity of subcarriers.

In this solution, processing is performed in frequency domain, and a signal processing process in an existing communication system also involves FFT and IFFT. Therefore, compatibility is high.

In a possible implementation, $n_0$ is determined by using the lowpass function. A value range of $n_0$ is between two constants greater than zero (for example, $n_0$ is greater than or equal to a constant _1 and less than or equal to a constant _2). The two constants are determined based on the quantity of subcarriers and the subcarrier sequence number, so that the first node can determine the wireless sensing result based on the received second signal. In addition, a lowpass feature of the lowpass function prevents the unauthorized users from determining the wireless sensing result through lowpass filtering. This protects user privacy.

According to a second aspect, a wireless sensing method is provided. The method may be performed by a second node, or may be performed by a component of the second node, for example, a processor, a chip, or a chip system of the second node, or may be implemented by a logic module or software that can implement all or a part of functions of the second node. For example, the method may be performed by the second node. The method includes: The second node receives a third signal from a first node. The third signal is a first signal after channel transmission and is received by the second node, and the first signal is a signal that has undergone randomization processing. The second node outputs a fourth signal. The fourth signal includes a signal obtained by transforming the third signal, and the fourth signal includes a signal output by a first antenna corresponding to the second node and a signal output by a second antenna corresponding to the second node.

Based on this solution, the first signal is randomized, and authorized users do not need to share a randomization parameter, so that unauthorized users cannot obtain the randomization parameter and cannot determine a sensing result. This improves privacy of the authorized user, and reduces overheads caused by parameter sharing. Further, in comparison with a solution of sending a jamming signal, a channel obfuscation solution, or the like, in this solution, the wireless sensing result can be determined based on the second signal received by the first node, only through round-trip signal receiving and sending and signal processing, and an additional device other than the first node and the second node does not need to be added. Therefore, implementation complexity is low. In conclusion, in embodiments of this application, when wireless sensing is performed, privacy of the authorized user can be protected, system overheads can be reduced, and implementation complexity is low.

In a possible implementation, the third signal is a signal of a first sensing signal and a second sensing signal flow after channel transmission, the first signal is jointly sent by the first node to the second node through a plurality of antennas, the first signal includes the first sensing signal flow and the second sensing signal flow, the first sensing signal flow is a random signal flow, and the second sensing signal flow is determined based on the first sensing signal flow and a lowpass function. In this solution, because of a lowpass feature of the lowpass function, the unauthorized users cannot determine the wireless sensing result. This further protects privacy of the authorized user.

Optionally, the fourth signal is obtained by performing conjugate transpose on the third signal. In this solution, processing is performed in time domain, a processing procedure is simple, and implementation complexity is low.

Optionally, the fourth signal is obtained by sequentially performing fast Fourier transform FFT, conjugation, and inverse fast Fourier transform IFFT on the third signal. In this solution, processing is performed in frequency domain, and signal processing process in an existing communication system also involves FFT and IFFT. Therefore, compatibility is high. In a possible implementation, a modulus value of the first sensing signal flow is equal to a modulus value of the second sensing signal flow. This ensures sensing precision. For example, because the modulus of the first sensing signal flow is equal to the modulus of the second sensing signal flow, channel estimation performance may be better. In addition, a wireless sensing result is usually determined based on a channel estimation result, and a more accurate wireless sensing result may be obtained based on a better channel estimation result. Therefore, sensing precision can be ensured.

Based on the second aspect, in another possible implementation of the second aspect, the first signal is sent by the first node to the second node through a single antenna, and the first signal is a random signal flow. The first sensing signal flow is a random signal flow. Because the authorized users do not need to share a parameter about the random signal flow, system overheads for parameter sharing are reduced.

The third signal includes a fifth signal and a sixth signal, the fourth signal includes a seventh signal and an eighth signal, the seventh signal is obtained by performing conjugate transpose on the fifth signal, and the eighth signal is obtained by sequentially performing conjugate transpose and addition of a time domain offset $n_0$ on the sixth signal, where $n_0$ is a sampling value of a lowpass function in a time unit for sending the first signal, k represents a subcarrier sequence number, and N represents a quantity of subcarriers. In this solution, processing is performed in time domain, a processing procedure is simple, and implementation complexity is low.

Optionally, the third signal includes a fifth signal and a sixth signal, the fourth signal includes a seventh signal and an eighth signal, the seventh signal is obtained by sequentially performing fast Fourier transform FFT, conjugation in frequency domain, and inverse fast Fourier transform IFFT on the fifth signal, and the eighth signal is obtained by sequentially performing fast Fourier transform FFT, conjugation in frequency domain, multiplication by a phase rotation factor $e^{-j\frac{2\pi}{N}kn_0}$, and inverse fast Fourier transform IFFT on the sixth signal, where $n_0$ is a sampling value of a lowpass function in a time unit for sending the first signal, k represents a subcarrier sequence number, and N represents a quantity of subcarriers. In this solution, processing is performed in frequency domain, and a signal processing process in an existing communication system also involves FFT and IFFT. Therefore, compatibility is high.

Optionally, the third signal includes a fifth signal and a sixth signal, the fourth signal includes a seventh signal and an eighth signal, the seventh signal is obtained by estimating a frequency-domain synthetic channel based on the fifth signal and performing conjugation on the fifth signal, and the eighth signal is obtained by estimating a frequency-domain synthetic channel based on the sixth signal and sequentially performing conjugation and multiplication by a rotation factor $e^{-j\frac{2\pi}{N}kn_0}$ on the sixth signal, where $n_0$ is a sampling value of a lowpass function in a time unit for sending the first signal, k represents a subcarrier sequence number, and N represents a quantity of subcarriers.

In this solution, processing is performed in frequency domain, and a signal processing process in an existing communication system also involves FFT and IFFT. Therefore, compatibility is high. Further, noise impact can be removed through channel estimation, and sensing precision can be improved.

In a possible implementation, $n_0$ is determined by using the lowpass function. A value range of $n_0$ is between two constants greater than zero (for example, $n_0$ is greater than or equal to a constant _1 and less than or equal to a constant _2). The two constants are determined based on the quantity of subcarriers and the subcarrier sequence number, so that the first node can determine the wireless sensing result based on the received second signal. In addition, a lowpass feature of the lowpass function prevents the unauthorized users from determining the wireless sensing result through lowpass filtering. This protects user privacy.

According to a third aspect, a communication apparatus is provided, to implement the foregoing methods. The communication apparatus may be the first node in the first aspect, or an apparatus, for example, a chip, included in the first node. Alternatively, the communication apparatus may be the second node in the second aspect, or an apparatus, for example, a chip, included in the second node.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a communication module. The communication module may include an output module (or a sending module) and an input module (or a receiving module), which are respectively configured to implement output (or sending) and input (or receiving) functions in any one of the foregoing aspects and the possible designs of the foregoing aspects. The processing module may be configured to implement a processing function in any one of the foregoing aspects and the possible designs of the foregoing aspects.

Optionally, the communication apparatus further includes a storage module, configured to store program instructions and data.

According to a fourth aspect, a communication apparatus is provided, including at least one processor. The processor is configured to run a computer program or instructions, or is configured to enable, using a logic circuit, the communication apparatus to perform the method according to any one of the foregoing aspects. The communication apparatus may be the first node in the first aspect, or an apparatus, for example, a chip, included in the first node. Alternatively, the communication apparatus may be the second node in the second aspect, or an apparatus, for example, a chip, included in the second node.

In some possible designs, the communication apparatus further includes a memory, configured to store the computer instructions and/or a configuration file of the logic circuit. Optionally, the memory is integrated with the processor, or the memory is independent of the processor.

In a possible design, the communication apparatus further includes a communication interface, configured to input and/or output a signal.

In some possible designs, the communication interface is an interface circuit, and is configured to read and write computer instructions. For example, the interface circuit is configured to: receive computer-executable instructions (where the computer-executable instructions are stored in the memory, and may be directly read from the memory, or may be read via another component), and transmit the computer-executable instructions to the processor.

In some possible designs, the communication interface is configured to communicate with a module outside the communication apparatus.

In some possible designs, the communication apparatus may be a chip system. When the communication apparatus is the chip system, the chip system may include a chip, or may include a chip and another discrete component.

According to a fifth aspect, a communication apparatus is provided, including a logic circuit and an interface circuit. The interface circuit is configured to input information and/or output information. The logic circuit is configured to: perform the method according to any one of the foregoing aspects, and perform processing and/or generate the to-be-output information based on the input information. The communication apparatus may be the first node in the first aspect, or an apparatus, for example, a chip, included in the first node. Alternatively, the communication apparatus may be the second node in the second aspect, or an apparatus, for example, a chip, included in the second node.

According to a sixth aspect, a computer-readable storage medium is provided. The computer-readable storage medium stores a computer program or instructions, and when the computer program or the instructions are executed by a processor, the method according to any one of the foregoing aspects is performed.

According to a seventh aspect, a computer program product is provided. When the computer program product is executed by a processor, the method according to any one of the foregoing aspects is performed.

It may be understood that when the communication apparatus provided in any one of the third aspect to the seventh aspect is a chip, the foregoing sending action/function may be understood as outputting information, and the foregoing receiving action/function may be understood as inputting information.

For technical effects brought by any design of the third aspect to the seventh aspect, refer to the technical effects brought by different designs of the first aspect or the second aspect. Details are not described herein again.

According to an eighth aspect, a communication system is provided. The communication system includes the first node according to the first aspect and the second node according to the second aspect.

## BRIEF DESCRIPTION OF DRAWINGS

FIG. 1 is a diagram of a communication system according to an embodiment of this application;

FIG. 2 is a diagram of an example of a wireless sensing method according to an embodiment of this application;

FIG. 3 is a diagram of an example of a wireless sensing method according to an embodiment of this application;

FIG. 4 is a diagram of an example of a method for obtaining a second sensing signal flow according to an embodiment of this application;

FIG. 5 is a diagram of another example of a method for obtaining a second sensing signal flow according to an embodiment of this application;

FIG. 6 shows an example of a communication apparatus according to an embodiment of this application; and

FIG. 7 shows another example of a communication apparatus according to an embodiment of this application.

## DESCRIPTION OF EMBODIMENTS

In descriptions of this application, unless otherwise specified, the character "/" indicates an "or" relationship between associated objects. For example, A/B may indicate A or B. "And/or" in this application merely describes an association relationship between the associated objects, and indicates that three relationships may exist. For example, A and/or B may indicate the following three cases: Only A exists, both A and B exist, and only B exists, where A and B may be singular or plural.

In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" mentioned throughout this specification means that particular features, structures, or characteristics related to embodiments are included in at least one embodiment of this application. Therefore, embodiments in the entire specification are not necessarily a same embodiment. In addition, these particular features, structures, or characteristics can be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with other features based on requirements. Correspondingly, the apparatus provided in embodiments of this application may also correspondingly implement these features or functions. Details are not described herein.

In this application, unless otherwise specified, for same or similar parts in embodiments, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application.

For ease of understanding of the technical solutions in embodiments of this application, the following first briefly describes technologies related to this application.

### 1. Encryption

Specifically, a transmitter end performs randomization on a sending sequence or a signal based on a key pre-agreed on by the transmitter end and a receiver end, so that unauthorized users cannot implement accurate channel estimation. This protects privacy of authorized users.

An example is used for description. In a secure high-efficiency long training field (secure high-efficiency long training field, secure HE-LTF) technology, a transmitter end and a receiver end first share a key, and then generate, based on an advanced encryption standard (advanced encryption standard, AES) encryption algorithm, an encrypted sequence by using the key. Then, the transmitter end modulates the encrypted sequence to generate and send a pilot symbol. After receiving the pilot symbol, the receiver end performs channel estimation by using a locally generated encrypted sequence, to obtain real channel state information. It should be noted that the local encrypted sequence is generated based on the AES encryption algorithm by using a key pre-agreed on by the transmitter end and the receiver end.

In this example, unauthorized users cannot perform accurate channel estimation because the unauthorized users do not know the encrypted sequence.

However, the encryption technology has great impact on sensing precision of authorized users. For example, in the secure HE-LTF technology, high-order modulation is used to increase difficulty of cracking by the unauthorized users. This deteriorates channel estimation performance, and affects sensing precision.

In addition, when two receive antennas are configured for the unauthorized users, signals on the two receive antennas may be divided to cancel the encrypted pilot symbol, and a sensing algorithm is executed based on a result of the division, so that a sensing function can still be implemented. Therefore, privacy protection cannot be implemented.

In addition, the transmitter end and the receiver end of authorized users need to share a key parameter in advance, which causes extra overheads.

2. Jamming device

Specifically, dedicated jamming (Jamming) devices are used to send jamming signals, to reduce a signal to interference plus noise ratio of unauthorized users and reduce channel estimation precision of the unauthorized users.

However, the jamming device has great impact on sensing precision of authorized users. In addition, the introduced jamming signal is essentially high-frequency jamming, while most signals for wireless sensing are low-frequency signals. The unauthorized users may filter out jamming by using a lowpass filtering algorithm. Therefore, privacy protection cannot be implemented. In addition, deployment of the jamming device requires extra hardware, which causes high costs.

3. Signal processing

Specifically, in a signal processing method, an equivalent channel response experienced by a sent signal is a version obtained after a real channel response is obfuscated, and an obfuscation manner (or an obfuscation algorithm) is shared only between a transmitter end and a receiver end of authorized users. Unauthorized users cannot estimate the real channel response because the unauthorized users do not know the obfuscation manner.

For example, in the processing method, a CSI obfuscation module may be added after an orthogonal frequency division multiplexing (orthogonal frequency division multiplexing, OFDM) modulation module of the transmitter end. For example, the CSI obfuscation module may be a finite impulse response (finite impulse response, FIR) filter. A time domain signal obtained through OFDM modulation is first processed by the CSI obfuscation module, and then sent. CSI obtained through channel estimation at the receiver end is actually a result of cascading artificial CSI introduced by the CSI obfuscation module and real CSI of a channel. The authorized user can restore the real CSI of the channel from the obfuscated CSI because the authorized user is aware of an obfuscation mode (namely, a specific implementation of the CSI obfuscation module). However, the unauthorized users cannot restore the real CSI because the unauthorized users do not know the obfuscation mode.

For another example, devices such as an intelligent reflective surface and a relay may be deployed in an environment. Reflecting a received signal by these devices is equivalent to introducing an artificial multipath component. As a result, CSI measured by the receiver end is inconsistent with real CSI. The receiver end can restore the real CSI of a channel because the receiver end is aware of a manner of introducing an artificial multipath. However, the unauthorized users cannot restore the real CSI because the unauthorized users do not know the manner of introducing the artificial multipath.

However, the signal processing solution requires additional hardware or processing modules, and has high implementation complexity. In addition, authorized users need to share a key parameter in advance, which causes extra overheads.

Due to disadvantages of the foregoing wireless sensing privacy protection technology, embodiments of this application provide a wireless sensing method and an apparatus. Detailed descriptions are provided below.

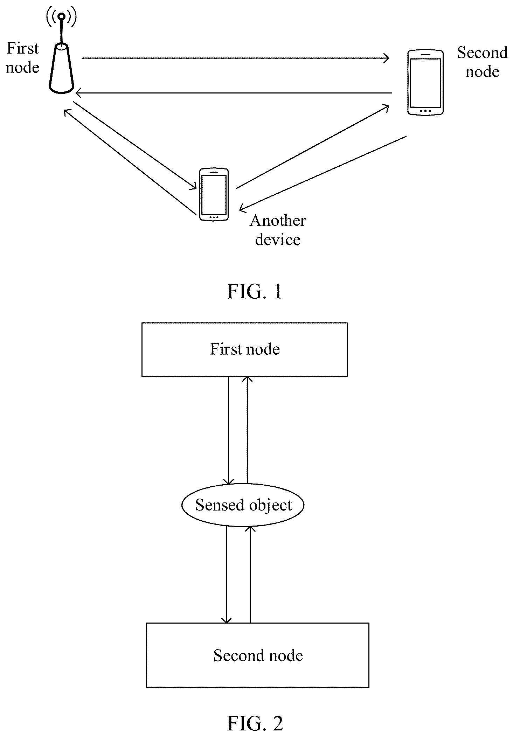

FIG. 1 is a diagram of a communication system according to an embodiment of this application. As shown in FIG. 1, an embodiment of this application provides a communication system. The communication system includes a first node and a second node. The first node and the second node communicate with each other to implement wireless sensing.

For example, this embodiment of this application may be used in a plurality of wireless sensing scenarios, for example, physiological feature monitoring applications such as breathing detection and heart rate detection, smart home monitoring applications such as presence detection, life and health feature monitoring applications such as fall detection, security monitoring applications such as intrusion detection, or applications related to environment reconstruction. This is not specifically limited in embodiments of this application.

For example, the first node or the second node in this embodiment of this application may be a terminal or a network device.

For example, the first node and the second node in this embodiment of this application may be used as sending nodes, or may be used as receiving nodes.

When the first node or the second node is used as a sending node, in a possible implementation, the sending node may include a processor and a transceiver. The processor is configured to: process a signal and output a processed signal, and the transceiver is configured to send the processed signal processed by the processor. In another possible implementation, the sending node includes a processor that is configured to: process a signal and output a processed signal. The sending node is coupled or linked to an external transceiver, and is configured to send the processed signal.

For example, when the first node and the second node are sending nodes, the sending nodes may include one or more transmitters, or be coupled to one or more transmitters. Each transmitter may be equipped with one or more antennas. The sending nodes may jointly send a plurality of signals through one or more antennas of the one or more transmitters, or may send one signal through one antenna of the one or more transmitters.

For example, when the first node and the second node are receiving nodes, the receiving nodes may include one or more receivers, and each receiver may be equipped with one or more antennas. The receiving nodes may jointly receive a plurality of signals through one or more antennas of the one or more receivers, or may receive one signal through one antenna of the one or more receivers.

It should be noted that, in this embodiment of this application, one signal may include a plurality of signal flows, and one signal flow is a signal that can carry one channel of independent information.

The sending node and the receiving node in this application may be various terminal devices. A terminal may be user equipment (user equipment, UE), an access terminal, a terminal unit, a user station, a terminal station, a mobile station, a mobile console, a remote station, a remote terminal, a user terminal (terminal equipment, TE), a mobile device, a wireless communication device, a terminal agent, a tablet computer (pad), a handheld device having a wireless communication function, a computing device, another processing device connected to a wireless modem, a vehicle-mounted device, a vehicle-mounted communication module, a wearable device, or a terminal apparatus in a 5th generation (5th generation, 5G) mobile communication technology network or a public land mobile network (public land mobile network, PLMN) evolved after 5G. An access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, an uncrewed aerial vehicle, a robot, a smart point of sale (point of sale, POS) machine, customer-premises equipment (customer-premises equipment, CPE), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), or the like. Alternatively, the terminal may be a terminal having a communication function in internet of things (internet of things, IoT), for example, a terminal (for example, an internet of vehicles device) in V2X, a terminal in D2D communication, or a terminal in M2M communication. The terminal may be movable or fixed.

A device form of the terminal is not limited in embodiments of this application. An apparatus configured to implement a function of the terminal device may be a terminal device, or may be an apparatus that can support the terminal device in implementing the function, for example, a chip system. The apparatus may be mounted in a terminal device or used in together with a terminal device. In this embodiment of this application, the chip system may include a chip, or may include a chip and another discrete component.

The sending node and the receiving node in this application may alternatively be various types of network devices or access devices in a communication system, namely, devices configured to communicate with the terminal device, for example, may include an evolved NodeB (NodeB or eNB or e-NodeB, evolved NodeB) in a long term evolution (long term evolution, LTE) system or an LTE-advanced (LTE-advanced, LTE-A) system, for example, a conventional macro base station eNB and a micro base station eNB in a heterogeneous network scenario; or may include a next generation NodeB (next generation NodeB, gNB) in a new radio (new radio, NR) system; or may include a transmission reception point (transmission reception point, TRP), a home base station (for example, a home evolved NodeB or a home NodeB, HNB), a baseband unit (baseband unit, BBU), a baseband pool (BBU pool), a wireless fidelity (wireless fidelity, Wi-Fi) access point (access point, AP), or the like; or may include a base station in a non-terrestrial network (non-terrestrial network, NTN), that is, may be deployed on an airplane platform or a satellite. In the NTN, the network device or the access device may be used as a layer 1 (L1) relay (relay), may be used as a base station, or may be used as an integrated access and backhaul (integrated access and backhaul, IAB) node. Alternatively, the network device or the access device may be a device that is in an IoT and that implements functions of a base station, for example, a device that is in uncrewed aerial vehicle communication, V2X, D2D, or machine-to-machine (machine-to-machine, M2M) and that implements the functions of the base station.

In some possible scenarios, the network device or the access device may alternatively be a module or unit that can implement a part of functions of a base station. For example, the network device or the access device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings of the names. For example, the network device or the access device may be a network device in an open radio access network (open RAN, ORAN) system or a module of the network device. In an ORAN system, a CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU. Any one of the CU (or the CU-CP and the CU-UP), the DU, and the RU in this application may be implemented by using a software module, a hardware module, or a combination of a software module and a hardware module.

A form of the network device is not limited in embodiments of this application. An apparatus for implementing a function of the network device may be the network device, or may be an apparatus, for example, a chip system, that can support the network device in implementing the function. The apparatus may be mounted in the network device or used together with the network device.

The wireless sensing method provided in this application is implemented by using program code in a memory. The wireless sensing method on a base station side, an AP side, or the like is run in a processing chip in a base station or an AP, any apparatus having communication, computing, and storage functions, or any processing device mounted on the base station side or the AP side. The wireless sensing method on a terminal side is run in a built-in processing chip in the terminal, or any apparatus having communication, computing, and storage functions.

FIG. 2 is a diagram of an example of a wireless sensing method according to an embodiment of this application. Execution entities include a first node and a second node.

It should be understood that the first node and the second node in this embodiment of this application may be sending nodes, or may be receiving nodes, for executing signal sending and receiving functions.

As shown in FIG. 2, in the wireless sensing method provided in this embodiment of this application, the first node sends a signal to the second node. The second node receives the signal, transforms the signal, and then sends a transformed signal to the first node. In this way, a round-trip (round-trip) signal transmission process is formed.

Steps performed on the first node side in the wireless sensing method mainly include the following steps.

(1) Perform randomization, and output a first signal.
(2) Receive a second signal.
(3) Process the second signal to determine a wireless sensing result.

Steps performed on the second node side in the wireless sensing method mainly include the following steps.

(1) Receive a third signal.
(2) Transform the third signal, and output a fourth signal.

In this embodiment of this application, the second node includes a plurality of antennas. A case in which the second node includes a single antenna to implement the solution provided in this application is not limited in this application.

In this embodiment of this application, a time unit may be a slot, or may be any time unit that is specified in the future and that is used for signal transmission. This is not limited in embodiments of this application.

In this embodiment of this application, determining the wireless sensing result may be obtaining a channel quality parameter (for example, CSI or a CIR) and determining the wireless sensing result based on the channel quality parameter, or may be determining the wireless sensing result in an artificial intelligence manner or another manner. This is not limited in this application.

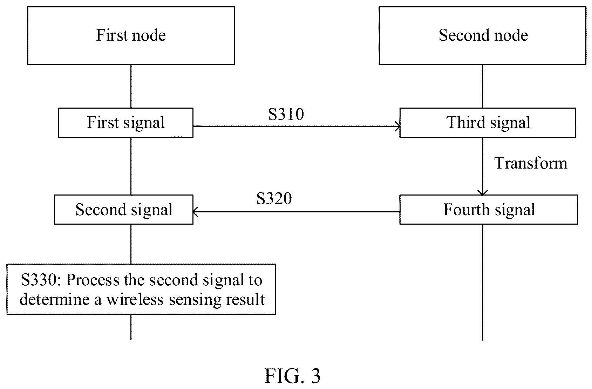

For example, as shown in FIG. 3, the wireless sensing method according to this embodiment of this application includes the following steps.

S310: A first node outputs a first signal, and correspondingly, a second node receives a third signal, where the third signal is a signal obtained by transmitting the first signal through a channel.

In this embodiment of this application, the first signal is a signal that has undergone randomization processing.

Optionally, this embodiment of this application is applicable to both a single-carrier scenario and a multi-subcarrier scenario. This is not limited in embodiments of this application. In the multi-carrier scenario, optionally, performing randomization in this embodiment of this application may be performing randomization on symbols on some subcarriers of the first node.

Performing randomization on the symbols on some subcarriers of the first node can not only prevent unauthorized users from stealing a sensing result of authorized users to a specific extent, but also reduce some overheads for randomization.

Optionally, performing randomization in this embodiment of this application may be performing randomization on symbols on all subcarriers of the first node.

Performing randomization on the symbols on all the subcarriers of the first node can prevent unauthorized users from stealing a sensing result of authorized users, to achieve a better privacy protection effect.

For example, performing randomization in this embodiment of this application may be: multiplying pilot symbols on a part of or all subcarriers of the first node by a random symbol used for randomization, to obtain a symbol that has undergone randomization processing.

In a possible implementation, symbols of randomized subcarriers satisfy a first condition, where the first condition is related to a modulus of the symbol of the subcarrier. In this way, channel estimation performance is good, so that sensing precision is improved.

Optionally, the first condition includes one or more of the following: Moduli of the symbols of the randomized subcarriers are equal; moduli of pilot symbols of the subcarriers are equal, and moduli of random symbols used for randomization are equal; or the like. In a constant modulus case, channel strength remains unchanged, and channel estimation performance is good, so that sensing precision can be improved.

It should be noted that, in this embodiment of this application, the random symbol used for randomization can prevent the unauthorized users from obtaining the random symbol and then obtaining the sensing result of the authorized user, so that user privacy is protected. In addition, the random symbol does not need to be shared between authorized users, so that overheads can be reduced.

In some embodiments, the first node includes a plurality of antennas.

In this scenario, in a possible implementation, the first signal in this embodiment of this application may be jointly sent to the second node through the plurality of antennas included in the first node. In other words, the first node sends the first signal by using a plurality of sensing signal flows. The first signal includes a first sensing signal flow and a second sensing signal flow. The first sensing signal flow and the second sensing signal flow are from different antennas of the first node.

Optionally, in this embodiment of this application, the first sensing signal flow may be a random signal flow that has undergone randomization processing.

In a possible implementation, in this embodiment of this application, the first sensing signal flow may be a signal flow whose modulus remains unchanged and whose phase changes with a time unit. In this way, sensing precision can be ensured while privacy of the authorized user is protected. For example, because the modulus of the first sensing signal flow remains unchanged, and the phase changes with the time unit, channel strength may remain unchanged, and channel estimation performance may be better. In addition, a wireless sensing result is usually determined based on a channel estimation result, and a more accurate wireless sensing result may be obtained based on a better channel estimation result. Therefore, sensing precision can be ensured while privacy of the authorized user is protected.

For example, the first sensing signal flow may be a random scalar whose modulus is any positive number and whose phase is evenly distributed from 0 to $2\pi$. This is more flexible, and can make the modulus of the first sensing signal flow remain unchanged and the phase change with the time unit. In this way, privacy of the authorized user can be protected, and in the constant modulus case, channel strength remains unchanged, and channel estimation performance is good, so that sensing precision can be improved.

In another possible implementation, the first sensing signal flow may be a point in a modulation constellation set. In this implementation, the first sensing signal flow is selected from a finite set, and has low implementation complexity. Optionally, the modulation constellation set may be a constant-modulus modulation constellation set, for example, may be a phase shift keying (phase shift keying, PSK) constellation set, for example, 8PSK, 16PSK, or 64PSK. When constant-modulus modulation is performed on the point in the modulation constellation set, an increase in a modulation order does not affect sensing precision. In this case, a "key space" may be increased by increasing a modulation order of the modulation constellation set, so that it is difficult for unauthorized users to obtain sensing information, and user privacy is protected. Optionally, the modulation constellation set may alternatively be a quadrature amplitude modulation (quadrature amplitude modulation, QAM) constellation set, for example, 16QAM or 64QAM. This is not limited in embodiments of this application.

In a possible implementation, in this embodiment of this application, the second sensing signal flow may be determined based on the first sensing signal flow and a lowpass function $\theta_k(t)$. The lowpass function $\theta_k(t)$ may change with time, and therefore may also be referred to as a time-varying function or a time-varying function that slowly changes with time. This is not specifically limited in embodiments of this application.

For example, a phase of the second sensing signal flow is determined based on a sampling value of the lowpass

function $\theta_k(t)$ in a time unit for sending the sensing signal flow, and a modulus of the second sensing signal flow is equal to the modulus of the first sensing signal flow. In one aspect, a lowpass feature of the lowpass function prevents the unauthorized users from determining the wireless sensing result through lowpass filtering, so that user privacy is protected. In another aspect, moduli of the first sensing signal flow and the second sensing signal flow are equal, so that sensing precision is ensured. For example, because the modulus of the first sensing signal flow remains unchanged, and the phase changes with the time unit, channel strength may remain unchanged, and channel estimation performance may be better. In addition, a wireless sensing result is usually determined based on a channel estimation result, and a more accurate wireless sensing result may be obtained based on a better channel estimation result. Therefore, sensing precision can be ensured.

The lowpass feature of the lowpass function may be that a threshold of the lowpass function is less than a first threshold. This is not limited in embodiments of this application.

In a possible implementation, the first sensing signal flow and the second sensing signal flow in this embodiment of this application satisfies the following relationship:

$$\frac{X_2[k]}{X_1[k]} = e^{j\rho}$$

Herein, $X_1[k]$ indicates a signal of the first sensing signal flow on a $k^{th}$ subcarrier, $X_2[k]$ indicates a signal of the second sensing signal flow on the $k^{th}$ subcarrier, $\rho$ indicates the sampling value of the lowpass function $\theta_k(t)$ in the time unit for sending the sensing flow, and k is a positive integer. The foregoing relationship may be used to obtain the second sensing signal flow when the first sensing signal flow is determined.

In another possible implementation, a signal of the second sensing signal flow on a $k^{th}$ subcarrier is a constellation point closest to $\widetilde{X_2[k]}$ in the modulation constellation set, where $\widetilde{X_2[k]}$ satisfies the following relationship:

$$\frac{\widetilde{X_2[k]}}{X_1[k]} = e^{j\rho}$$

Herein, $X_1[k]$ indicates a signal of the first sensing signal flow on the $k^{th}$ subcarrier, $\rho$ indicates the sampling value of the lowpass function $\theta_k(t)$ in the time unit for sending the sensing flow, and k is a positive integer. The foregoing relationship may be used to obtain the second sensing signal flow when the first sensing signal flow is determined.

In a possible implementation, that the second sensing signal flow may be determined based on the first sensing signal flow and the lowpass function $\theta_k(t)$ includes: The second sensing signal flow is determined based on the first sensing signal flow, the lowpass function $\theta_k(t)$, and a cyclic shift diversity (cyclic shift diversity, CSD) matrix K. The second sensing signal flow may be obtained when the first sensing signal flow is determined.

For example, the second sensing signal flow is determined based on the first sensing signal flow, a randomization matrix Ø, and K. Herein, Ø may be a diagonal matrix whose main diagonal elements are 1 and $e^{j\rho}$. $\rho$ indicates the sampling value of the lowpass function $\theta_k(t)$ in the time unit for sending the sensing flow, and k is a positive integer.

For example, the diagonal matrix may be in the following form:

$$\begin{bmatrix} 1 & 0 \\ 0 & e^{j\rho} \end{bmatrix}$$

For another example, the diagonal matrix may be in the following form:

$$\begin{bmatrix} e^{j\rho} & 0 \\ 0 & 1 \end{bmatrix}$$

It should be noted that a form of the diagonal matrix including 1 and $e^{j\rho}$ is not limited in embodiments of this application.

When the second sensing signal flow is determined based on the first sensing signal flow, the randomization matrix Ø, and K, in a possible implementation, the second sensing signal flow in this embodiment of this application satisfies the following relationship:

$$\begin{bmatrix} X_1[k] \\ X_2[k] \end{bmatrix} = K \times \emptyset \times \begin{bmatrix} X_1[k] \\ X_1[k] \end{bmatrix}$$

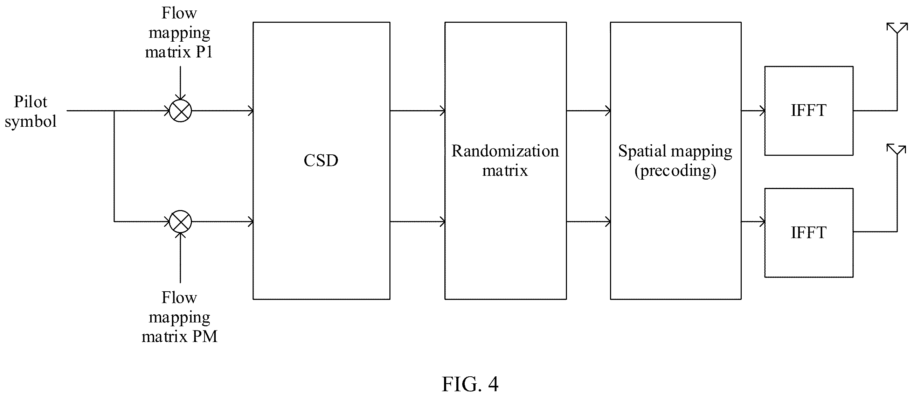

FIG. 4 shows an example of a method for obtaining the second sensing signal flow through CSD matrix transformation according to an embodiment of this application. As shown in FIG. 4, a vector $\begin{bmatrix} X_1[k] \\ X_1[k] \end{bmatrix}$ formed by two replicas of a first signal flow is sequentially processed by using a CSD transformation matrix K and the randomization matrix Ø, to obtain two to-be-sent signal flows. The two to-be-sent signal flows are represented by $\begin{bmatrix} X_1[k] \\ X_2[k] \end{bmatrix}$.

For example, the vector $\begin{bmatrix} X_1[k] \\ X_1[k] \end{bmatrix}$ formed by the two replicas of the first signal flow may be obtained after a pilot symbol passes through a flow mapping matrix P1 and the pilot symbol passes through a flow mapping matrix PM.

Optionally, spatial mapping and IFFT may be further performed on the two to-be-sent signal flows $\begin{bmatrix} X_1[k] \\ X_2[k] \end{bmatrix}$ to generate the first sensing signal flow and the second sensing signal flow.

The second sensing signal flow may be obtained by adding a Ø module before an existing CSD module, and has low implementation complexity.

When the second sensing signal flow is determined based on the first sensing signal flow, the randomization matrix Ø, and K, in another possible implementation, the second sensing signal flow in this embodiment of this application satisfies the following relationship:

$$\begin{bmatrix} X_1[k] \\ X_2[k] \end{bmatrix} = \emptyset \times K \times \begin{bmatrix} X_1[k] \\ X_1[k] \end{bmatrix}$$

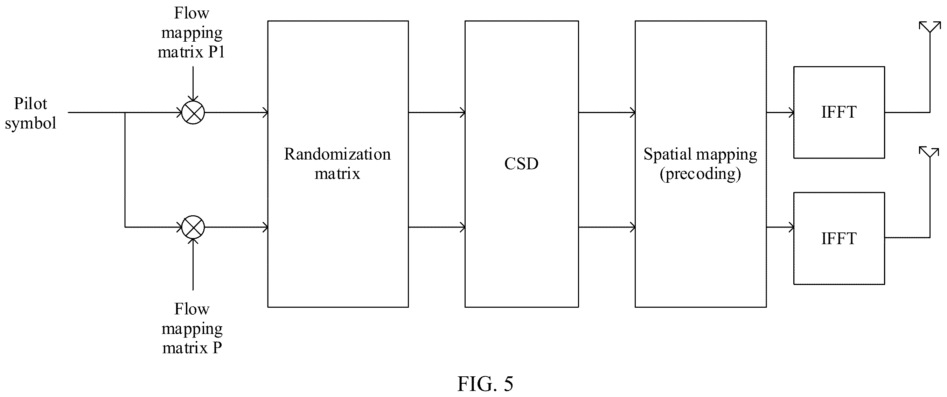

FIG. 5 shows another example of a method for obtaining the second sensing signal flow through CSD matrix transformation according to an embodiment of this application. As shown in FIG. 5:

a vector $\begin{bmatrix} X_1[k] \\ X_1[k] \end{bmatrix}$ formed by two replicas of a first signal flow is sequentially processed by using the randomization matrix Ø and a CSD transformation matrix K, to obtain two to-be-sent signal flows. The two to-be-sent signal flows are represented by $\begin{bmatrix} X_1[k] \\ X_2[k] \end{bmatrix}$.

For example, the vector $\begin{bmatrix} X_1[k] \\ X_1[k] \end{bmatrix}$ formed by the two replicas of the first signal flow may be obtained after a pilot symbol passes through a flow mapping matrix P1 and the pilot symbol passes through a flow mapping matrix PM.

Optionally, spatial mapping and IFFT may be further performed on the two to-be-sent signal flows $\begin{bmatrix} X_1[k] \\ X_2[k] \end{bmatrix}$ to generate the first sensing signal flow and the second sensing signal flow.

The second sensing signal flow may be obtained by adding a Ø module after an existing CSD module, and has low implementation complexity.

In some embodiments, the first node includes a single antenna.

In this scenario, in a possible implementation, the first signal in this embodiment of this application may be sent to the second node through the single antenna of the first node. In other words, the first node sends the first signal by using one sensing signal flow.

Optionally, in this embodiment of this application, the first signal may be a random signal flow that has undergone randomization processing. In other words, the first signal may be a sensing signal flow that has undergone randomization processing.

A name of the random signal flow or the sensing signal flow is not specifically limited in embodiments of this application.

It should be noted that for descriptions of the random signal flow, refer to the foregoing descriptions. Details are not described herein again.

S320: The second node sends a fourth signal to the first node, and correspondingly, the first node receives a second signal from the second node.

The fourth signal includes a signal obtained by transforming the third signal. The second signal is a signal obtained by transmitting the fourth signal through a channel.

In some embodiments, the first node includes a plurality of antennas.

In this scenario, in a possible implementation, the third signal includes a third sensing signal flow and a fourth sensing signal flow.

The third sensing signal flow is a signal obtained by transmitting the first sensing signal flow through a channel, and the fourth sensing signal flow is a signal obtained by transmitting the second sensing signal flow through a channel.

It should be understood that the second node includes a plurality of antennas. In this embodiment of this application, an example in which the second node includes two antennas is used for description. However, a quantity of antennas of the second node is not limited in this application.

It should be understood that, in this embodiment of this application, the third sensing signal flow and the fourth sensing signal flow that are included in the third signal are not sensing flows respectively and actually received by a first antenna and a second antenna that correspond to the second node. Instead, the antennas process two received signals, and this may be equivalent to receiving the third sensing signal flow and the fourth sensing signal flow. Processing performed by the antenna of the second node is not specifically described in this embodiment of this application.

In this scenario, optionally, that the second node transforms the third signal may be that the second node performs first transformation on the third signal. The third signal is transformed, so that the first node can determine a wireless sensing result based on the received second signal.

It should be noted that, in this embodiment of this application, the first transformation is performed on both the third sensing signal flow and the fourth sensing signal flow that are included in the third signal, and the first transformation performed on the third signal may be described in a unified manner.

Optionally, the first transformation may include: performing conjugate transpose. In this solution, processing is performed in time domain, a processing procedure is simple, and implementation complexity is low. Alternatively, the first transformation may include: performing fast Fourier transform (fast Fourier transform, FFT), conjugation, and inverse fast Fourier transform (inverse fast Fourier transform, IFFT). In this solution, processing is performed in frequency domain, and a signal processing process in an existing communication system also involves FFT and IFFT. Therefore, compatibility is high.

In other words, the fourth signal may be obtained by performing conjugate transpose on the third signal. In this solution, processing is performed in time domain, a processing procedure is simple, and implementation complexity is low. Alternatively, the fourth signal may be obtained by sequentially performing fast Fourier transform FFT, conjugation, and inverse fast Fourier transform IFFT on the third signal. In this solution, processing is performed in frequency domain, and a signal processing process in an existing communication system also involves FFT and IFFT. Therefore, compatibility is high.

It should be understood that, in this embodiment of this application, the first transformation is used to enable the second signal received by the first node to be in a form in which the wireless sensing result can be determined by solving a system of equations.

In this embodiment of this application, several specific examples of the first transformation are provided. All transformation forms that can be transformed to achieve a same objective in the future should fall within the protection scope of embodiments of this application. The first transformation is not specifically limited in embodiments of this application.

In some embodiments, the first node includes a single antenna.

In this scenario, the third signal is obtained by transmitting the first signal through the channel, and the third signal is a random signal flow.

It should be understood that the second node includes a plurality of antennas. In this embodiment of this application, an example in which the second node includes two antennas is used for description. However, a quantity of antennas of the second node is not limited in this application.

It should be understood that, that the second node receives the third signal may be that the two antennas of the second node respectively receive a fifth signal and a sixth signal. The third signal includes the fifth signal and the sixth signal.

In this scenario, optionally, that the second node transforms the third signal may be separately that the second node performs second transformation on the fifth signal and the second node performs third transformation on the sixth signal. The third signal is transformed, so that the first node can determine a wireless sensing result based on the received second signal.

Optionally, the second transformation may include: performing conjugate transpose, and the third transformation may include: performing conjugate transpose and addition of a time domain offset $n_0$. In this solution, processing is performed in time domain, a processing procedure is simple, and implementation complexity is low.

Alternatively, optionally, the second transformation may include: performing FFT, conjugation in frequency domain, and IFFT, and the third transformation may include: performing FFT, conjugation in frequency domain, multiplication by a phase rotation factor $e^{-j\frac{2\pi}{N}kn_0}$, and IFFT. In this solution, processing is performed in frequency domain, and a signal processing process in an existing communication system also involves FFT and IFFT. Therefore, compatibility is high.

Optionally, the second transformation may include: estimating a frequency-domain synthetic channel based on the fifth signal and performing conjugation, and the third transformation may include: estimating a frequency-domain synthetic channel based on the sixth signal and performing conjugation and multiplication by a rotation factor $e^{-j\frac{2\pi}{N}kn_0}$. In this solution, processing is performed in frequency domain, and a signal processing process in an existing communication system also involves FFT and IFFT. Therefore, compatibility is high. Further, noise impact can be removed through channel estimation, and sensing precision can be improved.

In other words, the third signal may include a fifth signal and a sixth signal, and the fourth signal includes a seventh signal and an eighth signal. The seventh signal is obtained by performing conjugate transpose on the fifth signal, and the eighth signal is obtained by sequentially performing conjugate transpose and addition of a time domain offset $n_0$ on the sixth signal. In this solution, processing is performed in time domain, a processing procedure is simple, and implementation complexity is low.

Alternatively, the seventh signal is obtained by sequentially performing fast Fourier transform FFT, conjugation in frequency domain, and inverse fast Fourier transform IFFT on the fifth signal, and the eighth signal is obtained by sequentially performing fast Fourier transform FFT, conjugation in frequency domain, multiplication by a phase rotation factor $e^{-j\frac{2\pi}{N}kn_0}$, and inverse fast Fourier transform IFFT on the sixth signal. In this solution, processing is performed in frequency domain, and a signal processing process in an existing communication system also involves FFT and IFFT. Therefore, compatibility is high.

Alternatively, the seventh signal is obtained by estimating a frequency-domain synthetic channel based on the fifth signal and performing conjugation on the fifth signal, and the eighth signal is obtained by estimating a frequency-domain synthetic channel based on the sixth signal and sequentially performing conjugation and multiplication by a rotation factor $e^{-j\frac{2\pi}{N}kn_0}$ on the sixth signal. In this solution, processing is performed in frequency domain, and a signal processing process in an existing communication system also involves FFT and IFFT. Therefore, compatibility is high. Further, noise impact can be removed through channel estimation, and sensing precision can be improved.

In this embodiment of this application, $n_0$ is a result of processing the sampling value of the lowpass function $\theta_k(t)$.

It should be understood that the second transformation and the third transformation are used to enable the second signal received by the first node to be in a form in which the wireless sensing result can be determined by solving a system of equations.

The second transformation and the third transformation described in this embodiment of this application are merely several specific examples. All transformation forms that can be transformed to achieve a same objective in the future should fall within the protection scope of embodiments of this application. The second transformation and the third transformation are not specifically limited in embodiments of this application.

S330: The first node processes the second signal to determine the wireless sensing result.

In this embodiment of this application, the second signal is a signal obtained by transmitting the fourth signal through the channel.

The fourth signal includes a signal output by the first antenna corresponding to the second node and a signal output by the second antenna corresponding to the second node.

For example, the signal output by the first antenna corresponding to the second node is the seventh signal, and the signal output by the second antenna corresponding to the second node is the eighth signal.

For example, that the first node determines the wireless sensing result based on the received second signal may be: The first node determines channel state information based on the received second signal, and determines the wireless sensing result based on the channel state information.

The following analyzes the unauthorized users in the wireless sensing method described in the wireless sensing method shown in FIG. 3 based on the round-trip procedure shown in FIG. 2.

For example, that the first node outputs the first signal, and the second node receives the third signal is a first phase of the round-trip procedure, and that the second node sends the fourth signal to the first node, and the first node receives the second signal is a second phase of the round-trip procedure.

An example in which the unauthorized users includes two antennas is used for description. Certainly, the unauthorized users may alternatively include more than two antennas. This is not limited in embodiments of this application.

For example, frequency domain forms of signals received by the two antennas of the unauthorized users in any time unit in the first phase are shown in the following formula:

$$R_{e1} = X_{11}H_{t1e1} + X_{12}H_{t2e1}$$

$$R_{e2} = X_{11}H_{t1e2} + X_{12}H_{t2e2}$$

Herein, $R_{e1}$ indicates a received signal on a first antenna of the unauthorized users, $R_{e2}$ indicates a received signal on a second antenna of the unauthorized users, $H_{t1e1}$ indicates a frequency-domain channel coefficient from the first antenna of the first node to the first antenna of the unauthorized users, $H_{t2e1}$ indicates a frequency-domain channel coefficient from the second antenna of the first node to the first antenna of the unauthorized users, $H_{t1e2}$ indicates a frequency-domain channel coefficient from the first antenna of the first node to the second antenna of the unauthorized users, and $H_{t2e2}$ indicates a frequency-domain channel coefficient from the second antenna of the first node to the second antenna of the unauthorized users.

It should be noted that a subcarrier sequence number is omitted herein, and noise impact is ignored.

Both $X_1$ and $X_2$ are unknown to the unauthorized users. Therefore, the unauthorized users cannot determine the wireless sensing result based on the received signals $R_{ie1}$ and $R_{ie2}$ on the two antennas.

Verification that the unauthorized users cannot obtain the wireless sensing result in the second phase is similar to that in the first phase, and details are not described herein again.

The following analyzes a reason why $\theta_k(t)$ is designed as the lowpass function. The first phase is still used as an example for analysis. Analysis for the second phase is similar to that for the first phase, and details are not described herein again.

The unauthorized users may obtain the wireless sensing result by jointly processing the received signals on the two antennas.

If $\frac{H_{t2e1}}{H_{t1e1}} = a_1 e^{j\theta_1}$, $\frac{H_{t2e2}}{H_{t1e2}} = a_2 e^{j\theta_2}$, and $\frac{X_{12}}{X_{11}} = e^{j\theta}$, the following relationship may be obtained.

$$\frac{R_{e2}}{R_{e1}} = \frac{X_{11}H_{t1e2}(1 + e^{j\theta}a_2 e^{j\theta_2})}{X_{11}H_{t1e1}(1 + e^{j\theta}a_1 e^{j\theta_1})}$$

Therefore, the following relationship is obtained.

$$\frac{|R_{e2}|}{|R_{e1}|} = \frac{|H_{t1e2}|}{|H_{t1e1}|}\sqrt{\frac{(1 + a_2^2 + 2a_2\cos(\theta+\theta_2))}{(1 + a_1^2 + 2a_1\cos(\theta+\theta_1))}}$$

$$\varphi\left(\frac{R_{e2}}{R_{e1}}\right) = \varphi\left(\frac{H_{t1e2}}{H_{t1e1}}\right) + \tan^{-1}\frac{a_2\sin(\theta+\theta_2)}{1 + a_2\cos(\theta+\theta_2)} - \tan^{-1}\frac{a_1\sin(\theta+\theta_1)}{1 + a_1\cos(\theta+\theta_1)}$$

In an actual system, $a_1$, $\theta_1$, $a_2$, and $\theta_2$ are determined based on an environment, slightly change, and are uncontrollable. In most scenarios, channel fluctuation caused by a sensed object is slow. Therefore, to obfuscate the unauthorized users and prevent the unauthorized users from correctly inferring a change rule of an equivalent channel to implement a sensing function, $\theta_k(t)$ needs to be designed as a slowly varying function with a lowpass feature (if the change is fast, the unauthorized users may remove an effect of the function through lowpass filtering). That is, the change rule of $\theta_k(t)$ is used to cover an actual change rule of the channel.

In some embodiments, the first node includes a plurality of antennas, and the sampling value $\rho$ of the lowpass function $\theta_k(t)$ may be a random number evenly distributed from 0 to $2\pi$.

In some embodiments, the first node includes a single antenna, and based on a form of the second signal received by the first node, a value range of a sampling value $n_0$ of the lowpass function satisfies the following relationship:

$$th1 \leq \frac{2\pi}{N} kn_0 \leq th2$$

In this embodiment of this application, the value range is determined based on a quantity N of subcarriers and a subcarrier sequence number k. Details are not described herein.

For example, a specific example of an algorithm for generating the lowpass function $\theta_k(t)$ is provided.

It should be understood that the algorithm in this embodiment of this application is merely a specific example of the lowpass function $\theta_k(t)$, and the algorithm for generating the lowpass function $\theta_k(t)$ is not limited in embodiments of this application.

The algorithm may include the following steps.

Step 1: Define a lowpass function $\theta_k(t)$ for any subcarrier k. It is assumed that an entire sensing process includes S rounds, where S is greater than or equal to 1, duration of each round is T, and T is greater than 0. In this case, total duration of the sensing process is ST, where ST may be time duration of $\theta_k(t)$.

For example, time of each round-trip procedure is one round.

Step 2: Randomly generate M evenly distributed random numbers ranging from 0 to $2\pi$ for any subcarrier k, where a time interval between adjacent random numbers is ST/M. In this way, the M generated random numbers are sampling values of $\theta_k(t)$ at moments such as 0, ST/M, ..., and (M-1)*ST/M.

Step 3: Perform interpolation on the sampling values by using a segmented interpolation method (for example, a cubic Hermite interpolation algorithm) to obtain $\theta_k(t)$.

In a scenario in which the first node includes a plurality of antennas, if $\theta_k(t) > 2\pi$, $\theta_k(t) = 2\pi$ is set, and if $\theta_k(t) < 0$, $\theta_k(t) = 0$ is set.

In a scenario in which the first node includes a single antenna, if $\theta_k(t) > th2$, $\theta_k(t) = th2$ is set, and if $\theta_k(t) < th1$, $\theta_k(t) = th1$ is set.

Step 4: Perform sampling on $\theta_k(t)$ at an interval of T to obtain a group of samples $\theta_k(nT)$, where n=0, 1, ..., S-1.

In a scenario in which the first node includes a plurality of antennas, $\theta$ used in an $n^{th}$ round of sensing is equal to $\theta_k(nT)$.

In the scenario in which the first node includes the plurality of antennas, $n_0$ used in the $n^{th}$ round of sensing is equal to $\left\lfloor \frac{N\varphi_k(nT)}{2k\pi} \right\rfloor$, where N represents a quantity of subcarriers, and $\lfloor * \rfloor$ represents rounding.

In a possible implementation, in the wireless sensing method shown in FIG. 3, processing performed on the signal that has undergone randomization processing may include some OFDM-related processing, to generate the to-be-sent first signal, so that the first signal sent by the first node is in a time domain form. The OFDM-related processing is optional processing. Processing that can achieve a same effect as that of this embodiment of this application in the future should fall within the protection scope of embodiments of this application. This is not limited in this application.

Optionally, in this embodiment of this application, when the signal that has undergone randomization processing is processed, the OFDM-related processing includes: performing IFFT; or the OFDM-related processing includes: adding a cyclic prefix (cyclic prefix, CP); or the OFDM-related processing includes: performing IFFT and adding a CP.

For example, when the OFDM-related processing includes: performing IFFT and adding a CP, the first signal is obtained by sequentially performing IFFT and adding a CP on the signal that has undergone randomization processing.

In the wireless sensing method shown in FIG. 3, processing performed on the second signal may include some OFDM-related processing, so that the second signal is in a frequency domain form after being processed. For descriptions of the OFDM-related processing, refer to the foregoing content in this embodiment of this application. Details are not described herein again.

Optionally, in this embodiment of this application, when the second signal is processed, the OFDM-related processing includes: removing the CP; or the OFDM-related processing includes: performing FFT; or the OFDM-related processing includes: removing the CP and performing FFT.

For example, when the OFDM-related processing includes: removing the CP and performing FFT, the first node receives the second signal, and sequentially performs CP removal and FFT on the second signal, to obtain a signal used to obtain the sensing result.

The following specifically describes the round-trip in the wireless sensing method shown in FIG. 3 by using several examples.

It should be understood that OFDM-related processing is performed on a signal in the following descriptions.

In some embodiments, it is assumed that the first node includes two antennas, and the second node includes two antennas. The round-trip procedure is described in the following parts:

First part:

For antennas i (i=1, 2), a pilot symbol Qi[k] on each subcarrier is multiplied by a random symbol Pi[k], to obtain Xi[k]=Qi[k]Pi[k], where Xi[k] is a signal that has undergone randomization processing, and k represents a $k^{th}$ subcarrier.

Then, IFFT is performed on Xi[k], and a CP is added, to obtain a randomized time domain signal xi[n], where xi[n] is the first signal.

The first node sends the first signal.

Second part:

Received signals on antennas of the second node are $r_1[n]$ and $r_2[n]$, and expressions are as follows:

$$r_1[n] = x_1[n] * h_{11}[n] + x_2[n] * h_{12}[n] + w_1[n]$$

$$r_2[n] = x_1[n] * h_{21}[n] + \mathrm{x}[n] * h_{22}[n] + w_2[n]$$

In a first processing manner, the second node performs CP removal and conjugate transpose on $r_1[n]$ and $r_2[n]$, to obtain processed signals $t_1[n] = r_1^*[-n]$ and $t_2[n] = r_2^*[-n]$, where * indicates conjugation.

Further, after the second node adds a CP to the signal, the second node separately sends ti[n] through the antennas i (i=1, 2) simultaneously.

In a second processing manner, the second node performs CP removal and then performs FFT on $r_1[n]$ and $r_2[n]$, to separately obtain $R_1[k]$ and $R_2[k]$.

Further, the second node performs conjugation in frequency domain on the signals to obtain $\mathrm{R}_1^*[k]$ and $\mathrm{R}_2^*[k]$.

Then, the second node performs IFFT on the signals to obtain processed time domain signals $t_1[n] = r_1^*[-n]$ and $t_2[n] = r_2^*[-n]$, and then adds a CP. The second node separately sends ti[n] through the antennas i (i=1, 2) simultaneously.

Third part:

Received signals on two antennas of the first node are yi[n] (i=1, 2).

Specifically, the first node removes the CP from each of the received yi[n] (i=1, 2), performs FFT to obtain frequency domain equations $Y_1[k]$ and $Y_2[k]$, then estimates a CSI modulus value by solving a system of the frequency domain equations, and further obtains, after the CSI modulus value is estimated, a wireless sensing result by using a wireless sensing algorithm.

Specifically, received time domain signals on the two antennas of the first node are as follows:

$$y_1[n] = t_1[n] * h_{11}[n] + t_2[n] * h_{21}[n] + z_1[n]$$

$$y_2[n] = t_1[n] * h_{12}[n] + t_2[n] * h_{22}[n] + z_2[n]$$

The frequency domain equations obtained after FFT is performed on the time domain signals are as follows:

$$Y_1[k] = X_1^*[k]|H_{11}[k]|^2 + X_2^*[k]H_{12}^*[k]H_{11}[k] + X_1^*[k]|H_{21}[k]|^2 + X_2^*[k]H_{22}^*[k]H_{21}[k] + Z_1[k]$$

$$Y_2[k] = X_1^*[k]H_{11}^*[k]H_{12}[k] + X_2^*[k]|H_{12}[k]|^2 + X_1^*[k]H_{21}^*[k]H_{22}[k] + X_2^*[k]|H_{22}[k]|^2 + Z_2[k]$$

The first node solves a system of the foregoing equations to obtain the following formula:

$$Y[k] = W_1[k]Y_1[k] + W_2[k]Y_2^*[k]$$

Expressions of $Y_1[k]$ and $Y_2[k]$ are substituted and a cross term is set to 0, and the following formula may be obtained:

$$\frac{W_1[k]}{W_2[k]} = -\frac{Q_1[k]P_1[k]}{Q_2^*[k]P_2^*[k]} = -\frac{X_1[k]}{X_2^*[k]}$$

That $W_1[k]=X_1[k]$, and $W_2[k]=-X_2^*[k]$ may be set. If $|X_1[k]| = |X_2[k]|$ is further met, the following formula is obtained:

$$Y[k] = |X_1[k]|^2(|H_{11}[k]|^2 + |H_{21}[k]|^2 - |H_{12}[k]|^2 - |H_{22}[k]|^2) + Z[k]$$

The first node estimates an equivalent channel according to the following formula:

$$|H_{11}[k]|^2 + |H_{21}[k]|^2 - |H_{12}[k]|^2 - |H_{22}[k]|^2$$

Further, the first node obtains the wireless sensing result based on the equivalent channel.

In some embodiments, it is assumed that the first node includes one antenna, and the second node includes two antennas. The round-trip procedure is described in the following parts:

First part:

For this antenna, a pilot symbol Q[k] on each subcarrier is multiplied by a random symbol P[k] whose modulus is 1 and whose phase is evenly distributed, to obtain X[k]=Q[k]P[k], where X[k] is a signal that has undergone randomization processing.

Then, IFFT is performed on X[k], and a CP is added, to obtain a randomized time domain signal x[n].

The first node sends the first signal.

Second part:

A received signal on each antenna of the second node is $r_i[n]$ (i=1, 2).

In a first processing manner, the second node removes the CP from a received signal on one antenna, and then performs conjugate transpose on the received signal.

The second node removes the CP from a received signal on the other antenna, and then performs conjugate transpose and addition of a time domain offset on the received signal.

Then, transmit signals $t_i[n]$ (i=1, 2) of the second node are obtained, that is, $t_1[n] = r_1^*[-n]$, and $t_2[n] = r_2^*[-(n - n_0)]$. Finally, a CP is added. The second node separately sends ti[n] signals through the antennas i (i=1, 2) simultaneously.

In a second processing manner, the second node performs CP removal and then performs FFT on each of the signals, to separately obtain $R_1[k]$ and $R_2[k]$.

The second node performs conjugation in frequency domain on $R_1[k]$, performs conjugation in frequency domain and multiplication by a phase rotation factor on $R_2[k]$ to obtain $R_1^*[k]$ and $R_2^*[k]e^{-j\frac{2\pi}{N}kn_0}$, and finally performs IFFT and CP addition. The second node separately sends ti[n] signals through the antennas i (i=1, 2) simultaneously.

In a third processing manner, the second node estimates frequency-domain synthetic channels G1[k]=P[k]H1[k] and G2[k]=P[k]H2[k] based on the received signals on the antennas, performs conjugation in frequency domain on G1[k] to obtain $G_1^*[k]$, performs conjugation in frequency domain and multiplication by a phase rotation factor on G2[k] to obtain $G_2^*[k]e^{-j\frac{2\pi}{N}kn_0}$, and then performs IFFT and CP addition on the two signals to generate a fourth signal. The transmit signal of the second node may be described by using the following formula (power normalization is omitted):

$$t_1[n] = g_1^*[-n]$$

$$t_2[n] = g_2^*[-(n - n_0)]$$

Third part:

A signal received by the first node based on one antenna is shown in the following formula:

$$y[n] = t_1[n] * h_1[n] + t_2[n] * h_2[n] + w[n]$$

After the first node performs CP removal and FFT on the received signal, the following frequency domain equation is obtained:

$$Y[k] = X^*[k]|H_1[k]|^2 + X^*[k]e^{-j\frac{2\pi}{N}kn_0}|H_2[k]|^2 + W[k]$$

It should be noted that the foregoing equation is a complex equation, is equivalent to two real equations, and may be used to determine two real unknown vectors $|H_1[k]|^2$ and $|H_2[k]|^2$.

Further, the first node obtains the wireless sensing result based on the equivalent channel.

It should be noted that, in the foregoing example, to distinguish between a time domain signal and a frequency domain signal, a case form of a signal letter is distinguished, where a lowercase letter represents time domain, and an uppercase letter represents frequency domain. It should be understood that, in this embodiment of this application, for ease of description, whether the letter is in uppercase or lowercase is not distinguished to indicate a frequency domain signal or a time domain signal. Therefore, unless otherwise specified, the signal represented by the letter may be understood as a time domain signal or a frequency domain signal. This does not affect the protection scope of embodiments of this application.

This embodiment of this application provides a wireless sensing method. In one aspect, in the round-trip process, the wireless sensing result can be determined based on the second signal received by the first node, only through round-trip signal receiving and sending and signal processing, and an additional device other than the first node and the second node does not need to be added. Therefore, implementation complexity is low. In another aspect, authorized users do not need to share a parameter for randomization, and therefore system overheads for parameter sharing are reduced. In still another aspect, randomization is performed on the first signal, and therefore the unauthorized users cannot determine the wireless sensing result, so that user privacy is protected. In conclusion, in this embodiment of this application, when wireless sensing is performed, system overheads can be reduced, implementation complexity is low, and privacy of the authorized user can be protected.

It may be understood that, in the foregoing embodiments, the methods and/or steps implemented by the first node may alternatively be implemented by a component (for example, a processor, a chip, a chip system, a circuit, a logic module, or software such as a chip or a circuit) that can be used in the first node. The methods and/or steps implemented by the second node may alternatively be implemented by a component (for example, a processor, a chip, a chip system, a circuit, a logic module, or software such as a chip or a circuit) that can be used in the second node.

The foregoing mainly describes the solutions provided in this application from the perspective of interaction between devices. Correspondingly, this application further provides a communication apparatus, and the communication apparatus is configured to implement the foregoing methods. The communication apparatus may be the first node in the foregoing method embodiments, an apparatus including the first node, or a component that can be used in the first node, for example, a chip in the first node. Alternatively, the communication apparatus may be the second node in the foregoing method embodiments, an apparatus including the second node, or a component that can be used in the second node, for example, a chip in the second node.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely a logical function division. During actual implementation, another division manner may be used.

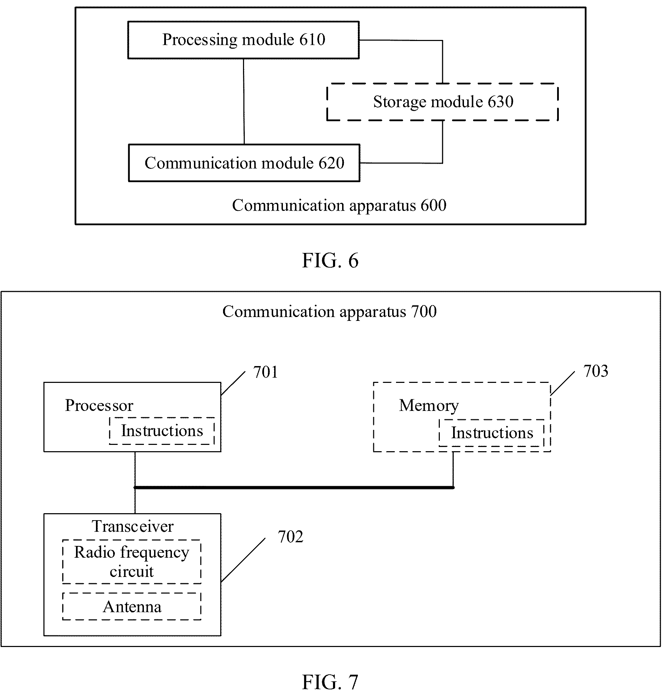

FIG. 6 is a diagram of an example of a communication apparatus according to an embodiment of this application. The communication apparatus 600 includes a communication module 620 and a processing module 610. The communication module 620 may communicate with the outside, and the processing module 610 is configured to process a signal. The communication module 620 may alternatively be referred to as a communication interface or a communication unit.

Optionally, the communication apparatus 600 may further include a storage module, the storage module may be configured to store instructions and/or data, and the processing module 610 may read the instructions and/or the data in the storage module.

In some embodiments, the communication module 620 is configured to implement an output and/or input function, and the communication module 620 may include a communication interface. Optionally, the communication module 620 may be a transceiver module (or referred to as a communication unit) configured to implement a sending and/or receiving function. In this case, the communication module 620 may be an input/output interface, a transceiver circuit, a transceiver machine, or a transceiver.

In some embodiments, the communication module 620 may include an output module (or a receiving module) and an input module (or a sending module), which are respectively configured to perform output (or receiving) and input (or sending) steps performed by the first node or the second node in the foregoing method embodiments, and/or configured to support another process of the technology described in this specification. The processing module 610 may be configured to perform processing (for example, determining and generation) steps performed by the first node or the second node in the foregoing method embodiments, and/or configured to support another process of the technology described in this specification.

For example, the communication apparatus is the first node in the foregoing method embodiments, or an apparatus including the first node, or a component that can be used in the first node. The communication module 620 is configured to output a first signal. The first signal is a signal that has undergone randomization processing. The communication module 620 is configured to receive a second signal. The second signal is a fourth signal after channel transmission, the fourth signal includes a signal obtained by transforming a third signal, and the third signal is the first signal after channel transmission. The fourth signal includes a signal output by a first antenna corresponding to a second node and a signal output by a second antenna corresponding to the second node. The processing module 610 is configured to process the second signal to determine a wireless sensing result.

In a possible implementation, that the communication module 620 outputs the first signal includes: jointly sending the first signal to the second node through a plurality of antennas. The first signal includes a first sensing signal flow and a second sensing signal flow, the first sensing signal flow is a random signal flow, and the second sensing signal flow is determined based on the first sensing signal flow and a lowpass function.

For example, transforming the third signal may include: performing first transformation on the third signal.

Optionally, the first transformation includes performing fast Fourier transform FFT, conjugation, and inverse fast Fourier transform IFFT. In this solution, processing is performed in frequency domain, and a signal processing process in an existing communication system also involves FFT and IFFT. Therefore, compatibility is high. Alternatively, optionally, the first transformation includes performing conjugate transpose. In this solution, processing is performed in time domain, a processing procedure is simple, and implementation complexity is low.

In other words, the fourth signal is obtained by performing conjugate transpose on the third signal. In this solution, processing is performed in time domain, a processing procedure is simple, and implementation complexity is low. Alternatively, the fourth signal is obtained by sequentially performing fast Fourier transform FFT, conjugation, and inverse fast Fourier transform IFFT on the third signal. In this solution, processing is performed in frequency domain, and a signal processing process in an existing communication system also involves FFT and IFFT. Therefore, compatibility is high.

In another possible implementation, that the communication module 620 outputs the first signal includes: sending the first signal to the second node through a single antenna, where the first signal is a random signal flow.

For example, transforming the third signal may include: performing second transformation on a fifth signal and performing third transformation on a sixth signal. The third signal includes the fifth signal and the sixth signal.

Optionally, transforming the third signal includes: performing second transformation on a fifth signal and performing third transformation on a sixth signal. The third signal includes the fifth signal and the sixth signal. The second transformation includes: performing conjugate transpose, and the third transformation includes: performing conjugate transpose and addition of a time domain offset $n_0$. In this solution, processing is performed in time domain, a processing procedure is simple, and implementation complexity is low.

Optionally, transforming the third signal includes: performing second transformation on a fifth signal and performing third transformation on a sixth signal. The third signal includes the fifth signal and the sixth signal. The second transformation includes: performing fast Fourier transform FFT, conjugation in frequency domain, and inverse fast Fourier transform IFFT. The third transformation includes: performing fast Fourier transform FFT, conjugation in frequency domain, multiplication by a phase rotation factor $e^{-j\frac{2\pi}{N}kn_0}$, and inverse fast Fourier transform IFFT.

Optionally, transforming the third signal includes: performing second transformation on a fifth signal and performing third transformation on a sixth signal. The third signal includes the fifth signal and the sixth signal. The second transformation includes: estimating a frequency-domain synthetic channel based on the fifth signal and performing conjugation; and the third transformation includes: estimating a frequency-domain synthetic channel based on the sixth signal and performing conjugation and multiplication by a rotation factor $e^{-j\frac{2\pi}{N}kn_0}$.

In other words, the third signal includes a fifth signal and a sixth signal, and the fourth signal includes a seventh signal and an eighth signal. The seventh signal is obtained by performing conjugate transpose on the fifth signal, and the eighth signal is obtained by sequentially performing conjugate transpose and addition of a time domain offset $n_0$ on the sixth signal. In this solution, processing is performed in time domain, a processing procedure is simple, and implementation complexity is low.

Alternatively, the seventh signal is obtained by sequentially performing fast Fourier transform FFT, conjugation in frequency domain, and inverse fast Fourier transform IFFT on the fifth signal, and the eighth signal is obtained by sequentially performing fast Fourier transform FFT, conjugation in frequency domain, multiplication by a phase rotation factor $e^{-j\frac{2\pi}{N}kn_0}$, and inverse fast Fourier transform IFFT on the sixth signal. In this solution, processing is performed in frequency domain, and a signal processing process in an existing communication system also involves FFT and IFFT. Therefore, compatibility is high.

Alternatively, the seventh signal is obtained by estimating a frequency-domain synthetic channel based on the fifth signal and performing conjugation on the fifth signal, and the eighth signal is obtained by estimating a frequency-domain synthetic channel based on the sixth signal and sequentially performing conjugation and multiplication by a rotation factor $e^{-j\frac{2\pi}{N}kn_0}$ on the sixth signal. In this solution, processing is performed in frequency domain, and a signal processing process in an existing communication system also involves FFT and IFFT. Therefore, compatibility is high. Further, noise impact can be removed through channel estimation, and sensing precision can be improved.

Optionally, a value range of $n_0$ is between two constants greater than zero, and the two constants are determined based on N and k.

For example, the communication apparatus is the second node in the foregoing method embodiments, an apparatus including the second node, or a component that can be used in the second node. The communication module 620 is configured to receive a third signal. The third signal is a first signal after channel transmission and is received by the second node, and the first signal is a signal that has undergone randomization processing. The communication module 620 is configured to output a fourth signal. The fourth signal includes a signal obtained by transforming the third signal, and the fourth signal includes a signal output by a first antenna corresponding to the second node and a signal output by a second antenna corresponding to the second node. The processing module 610 is configured to obtain the fourth signal by transforming the third signal.

The third signal is a signal obtained by transmitting a first sensing signal flow and a second sensing signal flow through the channel, the first signal is jointly sent by a first node to the second node through a plurality of antennas, the first signal includes the first sensing signal flow and the second sensing signal flow, the first sensing signal flow is a random signal flow, and the second sensing signal flow is determined based on the first sensing signal flow and a lowpass function.

For example, transforming the third signal may include: performing first transformation on the third signal.

Optionally, the first transformation includes performing fast Fourier transform FFT, conjugation, and inverse fast Fourier transform IFFT. In this solution, processing is performed in frequency domain, and a signal processing process in an existing communication system also involves FFT and IFFT. Therefore, compatibility is high. Alternatively, optionally, the first transformation includes performing conjugate transpose. In this solution, processing is performed in time domain, a processing procedure is simple, and implementation complexity is low.

In other words, the fourth signal is obtained by performing conjugate transpose on the third signal. In this solution, processing is performed in time domain, a processing procedure is simple, and implementation complexity is low. Alternatively, the fourth signal is obtained by sequentially performing fast Fourier transform FFT, conjugation, and inverse fast Fourier transform IFFT on the third signal. In this solution, processing is performed in frequency domain, and a signal processing process in an existing communication system also involves FFT and IFFT. Therefore, compatibility is high. In another possible implementation, the first signal is sent by the first node through a single antenna, and the first signal is a random signal flow.

For example, transforming the third signal may include: performing second transformation on a fifth signal and performing third transformation on a sixth signal. The third signal includes the fifth signal and the sixth signal.

Optionally, transforming the third signal includes: performing second transformation on a fifth signal and performing third transformation on a sixth signal. The third signal includes the fifth signal and the sixth signal. The second transformation includes: performing conjugate transpose, and the third transformation includes: performing conjugate transpose and addition of a time domain offset $n_0$. In this solution, processing is performed in time domain, a processing procedure is simple, and implementation complexity is low.

Optionally, transforming the third signal includes: performing second transformation on a fifth signal and performing third transformation on a sixth signal. The third signal includes the fifth signal and the sixth signal. The second transformation includes: performing fast Fourier transform FFT, conjugation in frequency domain, and inverse fast Fourier transform IFFT. The third transformation includes: performing fast Fourier transform FFT, conjugation in frequency domain, multiplication by a phase rotation factor $e^{-j\frac{2\pi}{N}kn_0}$, and inverse fast Fourier transform IFFT. In this solution, processing is performed in frequency domain, and a signal processing process in an existing communication system also involves FFT and IFFT. Therefore, compatibility is high.

Optionally, transforming the third signal includes: performing second transformation on a fifth signal and performing third transformation on a sixth signal. The third signal includes the fifth signal and the sixth signal. The second transformation includes: estimating a frequency-domain synthetic channel based on the fifth signal and performing conjugation; and the third transformation includes: estimating a frequency-domain synthetic channel based on the sixth signal and performing conjugation and multiplication by a rotation factor $e^{-j\frac{2\pi}{N}kn_0}$. In this solution, processing is performed in frequency domain, and a signal processing process in an existing communication system also involves FFT and IFFT. Therefore, compatibility is high. Further, noise impact can be removed through channel estimation, and sensing precision can be improved.

In other words, the third signal includes a fifth signal and a sixth signal, and the fourth signal includes a seventh signal and an eighth signal. The seventh signal is obtained by performing conjugate transpose on the fifth signal, and the eighth signal is obtained by sequentially performing conjugate transpose and addition of a time domain offset $n_0$ on the sixth signal. In this solution, processing is performed in time domain, a processing procedure is simple, and implementation complexity is low.

Alternatively, the seventh signal is obtained by sequentially performing fast Fourier transform FFT, conjugation in frequency domain, and inverse fast Fourier transform IFFT on the fifth signal, and the eighth signal is obtained by sequentially performing fast Fourier transform FFT, conjugation in frequency domain, multiplication by a phase rotation factor $e^{-j\frac{2\pi}{N}kn_0}$, and inverse fast Fourier transform IFFT on the sixth signal. In this solution, processing is performed in frequency domain, and a signal processing process in an existing communication system also involves FFT and IFFT. Therefore, compatibility is high.

Alternatively, the seventh signal is obtained by estimating a frequency-domain synthetic channel based on the fifth signal and performing conjugation on the fifth signal, and the eighth signal is obtained by estimating a frequency-domain synthetic channel based on the sixth signal and sequentially performing conjugation and multiplication by a rotation factor $e^{-j\frac{2\pi}{N}kn_0}$ on the sixth signal. In this solution, processing is performed in frequency domain, and a signal processing process in an existing communication system also involves FFT and IFFT. Therefore, compatibility is high. Further, noise impact can be removed through channel estimation, and sensing precision can be improved.

Optionally, a value range of $n_0$ is between two constants greater than zero, and the two constants are determined based on N and k.

In this application, the communication apparatus 600 is presented in a form of functional modules obtained through division in an integrated manner. The "module" herein may be a specific ASIC, a circuit, a processor that executes one or more software or firmware programs, a memory, an integrated logic circuit, and/or another component capable of providing the foregoing functions.

In some embodiments, in terms of hardware implementation, a person skilled in the art may figure out that the communication apparatus 600 may be in a form of the communication apparatus 700 shown in FIG. 7.

In some embodiments, in this embodiment of this application, when the communication apparatus 600 may be a chip or a chip system in the first node or the second node, the communication module 620 may be an interface circuit, a pin, or the like. Specifically, the interface circuit may include an input circuit and an output circuit, and the processing module 610 may include a processing circuit.

In some embodiments, in this embodiment of this application, when the communication apparatus 600 may be a chip or a chip system in the first node or the second node, a function/implementation process of the communication module 620 may be implemented through an input/output interface (or a communication interface) of the chip or the chip system, and a function/implementation process of the processing module 610 may be implemented through a processor (or a processing circuit) of the chip or the chip system.

The communication apparatus 600 provided in this embodiment may perform the foregoing wireless sensing method. Therefore, for technical effects that can be achieved by the communication apparatus, refer to the foregoing method embodiments. Details are not described herein again.

In a possible product form, the first node or the second node in embodiments of this application may alternatively be implemented by using the following: one or more field programmable gate arrays (field programmable gate arrays, FPGAs), a programmable logic device (programmable logic device, PLD), a controller, a state machine, gate logic, a discrete hardware component, any other appropriate circuit, or any combination of circuits that can perform the various functions described in this application.

In another possible product form, the first node or the second node in embodiments of this application may be implemented by using a general bus architecture. For ease of description, FIG. 7 is a diagram of a structure of a communication apparatus 700 according to an embodiment of this application. The communication apparatus 700 includes a processor 701 and one or more transceivers 702 (one transceiver is used as an example for illustration in FIG. 7). Certainly, FIG. 7 shows only main components of the communication apparatus 700. In addition to the processor 701 and the transceiver 702, the communication apparatus may further include a memory 703.

Optionally, the processor 701 may be a general-purpose central processing unit (central processing unit, CPU), a microprocessor, an application-specific integrated circuit (application-specific integrated circuit, ASIC), one or more integrated circuits configured to control program execution in the solutions of this application, or a processing core configured to process data (for example, computer program instructions). The processor may be a single-core (single-CPU) processor, or may be a multi-core (multi-CPU) processor.

During specific implementation, in an embodiment, the processor 701 may include one or more CPUs.

Optionally, the processor 701, the transceiver 702, and the memory 703 may be connected through a communication bus. The communication bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 7, but this does not mean that there is only one bus or only one type of bus. The communication bus is configured to connect different components in the communication apparatus 700, so that the different components in the communication apparatus 700 may communicate and interact with each other.

Optionally, the transceiver 702, which may also be referred to as a communication interface, may be a transceiver module, and is configured to communicate with another device or a communication network. The communication network may be, for example, an Ethernet (Ethernet), a RAN, or a WLAN. For example, the transceiver 702 may be an apparatus like a transceiver machine. Alternatively, the transceiver 702 may be a transceiver circuit located in the processor 701, to implement signal input and signal output of the processor.

Optionally, the memory 703 may be an apparatus having a storage function, for example, may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other optical disk storage, optical disc storage (including a compressed optical disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer, but is not limited thereto. The memory may exist independently, and is connected to the processor 701 through a communication bus. The memory may alternatively be integrated with the processor.

Although not shown, during specific implementation, in an embodiment, the communication apparatus 700 may further include an output device and an input device. The output device communicates with the processor 701, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 701, and may receive an input of a user in a plurality of manners. For example, the input device may be a mouse, a keyboard, a touchscreen device, or a sensor device.

Optionally, the processor 701 is mainly configured to: process a communication protocol and communication data, control the entire communication apparatus 700, execute a software program, and process data of the software program. The memory 703 is mainly configured to store the software program and data. The transceiver 702 may include a radio frequency circuit and an antenna. The radio frequency circuit is mainly configured to perform conversion between a baseband signal and a radio frequency signal and process the radio frequency signal. The antenna is mainly configured to receive and send a radio frequency signal in a form of electromagnetic wave.

In an implementation, after the communication apparatus 700 is powered on, the processor 701 may read the software program in the memory 703, interpret and execute instructions of the software program, and process data of the software program. When data needs to be sent wirelessly, the processor 701 performs baseband processing on the to-be-sent data, and then outputs a baseband signal to the radio frequency circuit. The radio frequency circuit performs radio frequency processing on the baseband signal, and then sends a radio frequency signal in an electromagnetic wave form through the antenna. When the data is sent to the communication apparatus 700, the radio frequency circuit receives the radio frequency signal through the antenna, converts the radio frequency signal into a baseband signal, and outputs the baseband signal to the processor 701. The processor 701 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus 700.

In an example, a function/implementation process of the processing module 610 in FIG. 6 may be implemented by the processor 701 in the communication apparatus 700 shown in FIG. 7 by invoking computer-executable instructions stored in the memory 703. A function/implementation process of the communication module 620 in FIG. 6 may be implemented by the transceiver 702 in the communication apparatus 700 shown in FIG. 7.

In some embodiments, an embodiment of this application further provides a communication apparatus. The communication apparatus includes a processor, configured to implement the method in any one of the foregoing method embodiments. The communication apparatus may be the first node or the second node in the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any one of the foregoing method embodiments are implemented.

Optionally, the computer-executable instructions in embodiments of this application may also be referred to as application program code. This is not specifically limited in embodiments of this application.

This application further provides a computer program product. When the computer program product is executed by a computer, functions in any one of the foregoing method embodiments are implemented.

A person of ordinary skill in the art may understand that, for the purpose of convenient and brief description, for a detailed operating process of the foregoing system, apparatus, and unit, refer to a corresponding process in the foregoing method embodiment. Details are not described herein again.

It may be understood that the system, apparatus, and method described in this application may alternatively be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, this is, may be located in one position, or may be distributed on a plurality of network units. Parts displayed as units may or may not be physical units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or a part of the foregoing embodiments may be implemented by using software, hardware, firmware, or any combination thereof. When a software program is used for implementation, all or a part of the embodiments may be implemented in a form of computer program product. The computer program product includes one or more computer instructions. When the computer program instructions are loaded and executed on a computer, all or a part of procedures (or functions) described in embodiments of this application are implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of a plurality of. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1.   A wireless sensing method, comprising:

    outputting, by a first node, a first signal, wherein the first signal is a signal that has undergone randomization processing;
    receiving, by the first node, a second signal, wherein the second signal is a fourth signal after channel transmission and is received by the first node, the fourth signal comprises a signal obtained by transforming a third signal, the third signal is the first signal after channel transmission and is received by a second node, and the fourth signal comprises a signal output by a first antenna corresponding to the second node and a signal output by a second antenna corresponding to the second node; and
    processing, by the first node, the second signal to determine a wireless sensing result.

2.   The method according to claim 1, wherein
    the outputting, by the first node, the first signal comprises: jointly sending, by the first node, the first signal to the second node through a plurality of antennas, wherein the first signal comprises a first sensing signal flow and a second sensing signal flow, the first sensing signal flow is a random signal flow, and the second sensing signal flow is determined based on the first sensing signal flow and a lowpass function.

3.   The method according to claim 2, wherein a modulus value of the first sensing signal flow is equal to a modulus value of the second sensing signal flow.

4.   The method according to any one of claims 1 to 3, wherein the fourth signal is obtained by performing conjugate transpose on the third signal.

5.   The method according to any one of claims 1 to 3, wherein the fourth signal is obtained by sequentially performing fast Fourier transform FFT, conjugation, and inverse fast Fourier transform IFFT on the third signal.

6. The method according to claim 1, wherein the outputting, by the first node, the first signal comprises: sending, by the first node, the first signal to the second node through a single antenna, wherein the first signal is a random signal flow.

7. The method according to claim 6, wherein the third signal comprises a fifth signal and a sixth signal, the fourth signal comprises a seventh signal and an eighth signal, the seventh signal is obtained by performing conjugate transpose on the fifth signal, and the eighth signal is obtained by sequentially performing conjugate transpose and addition of a time domain offset $n_0$ on the sixth signal, wherein $n_0$ is a sampling value of a lowpass function in a time unit for sending the first signal.

8. The method according to claim 6, wherein the third signal comprises a fifth signal and a sixth signal, the fourth signal comprises a seventh signal and an eighth signal, the seventh signal is obtained by sequentially performing fast Fourier transform FFT, conjugation in frequency domain, and inverse fast Fourier transform IFFT on the fifth signal, and the eighth signal is obtained by sequentially performing fast Fourier transform FFT, conjugation in frequency domain, multiplication by a phase rotation factor $e^{-j\frac{2\pi}{N}kn_0}$, and inverse fast Fourier transform IFFT on the sixth signal, wherein $n_0$ is a sampling value of a lowpass function in a time unit for sending the first signal, k represents a subcarrier sequence number, and N represents a quantity of subcarriers.

9. The method according to claim 6, wherein the third signal comprises a fifth signal and a sixth signal, the fourth signal comprises a seventh signal and an eighth signal, the seventh signal is obtained by estimating a frequency-domain synthetic channel based on the fifth signal and performing conjugation on the fifth signal, and the eighth signal is obtained by estimating a frequency-domain synthetic channel based on the sixth signal and sequentially performing conjugation and multiplication by a rotation factor $e^{-j\frac{2\pi}{N}kn_0}$ on the sixth signal, wherein $n_0$ is a sampling value of a lowpass function in a time unit for sending the first signal, k represents a subcarrier sequence number, and N represents a quantity of subcarriers.

10. The method according to any one of claims 7 to 9, wherein a value range of $n_0$ is between two constants greater than zero, and the two constants are determined based on N and k.

11. A wireless sensing method, comprising:

receiving, by a second node, a third signal, wherein the third signal is a first signal after channel transmission and is received by the second node, and the first signal is a signal that has undergone randomization processing and that is output by a first node; and
outputting, by the second node, a fourth signal, wherein the fourth signal comprises a signal obtained by transforming the third signal, and the fourth signal comprises a signal output by a first antenna corresponding to the second node and a signal output by a second antenna corresponding to the second node.

12. The method according to claim 11, wherein the third signal is a signal is a first sensing signal and a second sensing signal flow after channel transmission, the first signal is jointly sent by the first node to the second node through a plurality of antennas, the first signal comprises the first sensing signal flow and the second sensing signal flow, the first sensing signal flow is a random signal flow, and the second sensing signal flow is determined based on the first sensing signal flow and a lowpass function.

13. The method according to claim 11 or 12, wherein a modulus value of the first sensing signal flow is equal to a modulus value of the second sensing signal flow.

14. The method according to any one of claims 11 to 13, wherein the fourth signal is obtained by performing conjugate transpose on the third signal.

15. The method according to any one of claims 11 to 13, wherein the fourth signal is obtained by sequentially performing fast Fourier transform FFT, conjugation, and inverse fast Fourier transform IFFT on the third signal.

16. The method according to claim 11, wherein the first signal is sent by the first node to the second node through a single antenna, and the first signal is a random signal flow.

17. The method according to claim 16, wherein the third signal comprises a fifth signal and a sixth signal, the fourth signal comprises a seventh signal and an eighth signal, the seventh signal is obtained by performing conjugate transpose on the fifth signal, and the eighth signal is obtained by sequentially performing conjugate transpose and addition of a time domain offset $n_0$ on the sixth signal, wherein $n_0$ is a sampling value of a lowpass function in a time unit for sending the first signal.

18. The method according to claim 16, wherein the third signal comprises a fifth signal and a sixth signal, the fourth signal comprises a seventh signal and an eighth signal, the seventh signal is obtained by sequentially performing fast Fourier transform FFT, conjugation in frequency domain, and inverse fast Fourier transform IFFT on the fifth signal, and the eighth signal is obtained by sequentially performing fast Fourier transform FFT, conjugation in frequency domain, multiplication by a phase rotation factor $e^{-j\frac{2\pi}{N}kn_0}$, and inverse fast Fourier transform IFFT on the sixth signal, wherein $n_0$ is a sampling value of a lowpass function in a time unit for sending the first signal, k represents a subcarrier sequence number, and N represents a quantity of subcarriers.

19. The method according to claim 16, wherein the third signal comprises a fifth signal and a sixth signal, the fourth signal comprises a seventh signal and an eighth signal, the seventh signal is obtained by estimating a frequency-domain synthetic channel based on the fifth signal and performing conjugation on the fifth signal, and the eighth signal is obtained by estimating a frequency-domain synthetic channel based on the sixth signal and sequentially performing conjugation and multiplication by a rotation factor $e^{-j\frac{2\pi}{N}kn_0}$ on the sixth signal, wherein $n_0$ is a sampling value of a lowpass function in a time unit for sending the first signal, k represents a subcarrier sequence number, and N represents a quantity of subcarriers.

20. The method according to any one of claims 17 to 19, wherein a value range of $n_0$ is between two constants greater than zero, and the two constants are determined based on N and k.

21. A communication apparatus, comprising a processing module and a communication module, wherein

the communication module is configured to output a first signal, wherein the first signal is a signal that has undergone randomization processing;
the communication module is configured to receive a second signal, wherein the second signal is a fourth signal after channel transmission and is received by a first node, the fourth signal comprises a signal obtained by transforming a third signal, the third signal is the first signal after channel transmission, and the fourth signal comprises a signal output by a first antenna corresponding to a second node and a signal output by a second antenna corresponding to the second node; and
the processing module is configured to process the second signal to determine a wireless sensing result.

22. The apparatus according to claim 21, wherein that the communication module outputs the first signal comprises: the processing module jointly sends the first signal through a plurality of antennas, wherein the first signal comprises a first sensing signal flow and a second sensing signal flow, the first sensing signal flow is a random signal flow, and the second sensing signal flow is determined based on the first sensing signal flow and a lowpass function.

23. The apparatus according to claim 21 or 22, wherein a modulus value of the first sensing signal flow is equal to a modulus value of the second sensing signal flow.

24. The apparatus according to any one of claims 21 to 23, wherein the fourth signal is obtained by performing conjugate transpose on the third signal.

25. The apparatus according to any one of claims 21 to 23, wherein the fourth signal is obtained by sequentially performing fast Fourier transform FFT, conjugation, and inverse fast Fourier transform IFFT on the third signal.

26. The apparatus according to claim 21, wherein that the communication module outputs the first signal comprises: the communication module sends the first signal through a single antenna, wherein the first signal is a random signal flow.

27. The apparatus according to claim 26, wherein the third signal comprises a fifth signal and a sixth signal, the fourth signal comprises a seventh signal and an eighth signal, the seventh signal is obtained by performing conjugate transpose on the fifth signal, and the eighth signal is obtained by sequentially performing conjugate transpose and addition of a time domain offset $n_0$ on the sixth signal, wherein $n_0$ is a sampling value of a lowpass function in a time unit for sending the first signal.

28. The apparatus according to claim 26, wherein the third signal comprises a fifth signal and a sixth signal, the fourth signal comprises a seventh signal and an eighth signal, the seventh signal is obtained by sequentially performing fast Fourier transform FFT, conjugation in frequency domain, and inverse fast Fourier transform IFFT on the fifth signal, and the eighth signal is obtained by sequentially performing fast Fourier transform FFT, conjugation in frequency domain, multiplication by a phase rotation factor $e^{-j\frac{2\pi}{N}kn_0}$, and inverse fast Fourier transform IFFT on the sixth signal, wherein $n_0$ is a sampling value of a lowpass function in a time unit for sending the first signal, k represents a subcarrier sequence number, and N represents a quantity of subcarriers.

29. The apparatus according to claim 26, wherein the third signal comprises a fifth signal and a sixth signal, the fourth signal comprises a seventh signal and an eighth signal, the seventh signal is obtained by estimating a frequency-domain synthetic channel based on the fifth signal and performing conjugation on the fifth signal, and the eighth signal is obtained by estimating a frequency-domain synthetic channel based on the sixth signal and sequentially performing conjugation and multiplication by a rotation factor $e^{-j\frac{2\pi}{N}kn_0}$ on the sixth signal, wherein $n_0$ is a sampling value of a lowpass function in a time unit for sending the first signal, k represents a subcarrier sequence number, and N represents a quantity of subcarriers.

30. The apparatus according to any one of claims 27 to 29, wherein a value range of $n_0$ is between two constants greater than zero, and the two constants are determined based on N and k.

31. A communication apparatus, comprising a communication module and a processing module, wherein

the communication module is configured to receive a third signal, wherein the third signal is the first signal after channel transmission and is received by a second node, and the first signal is a signal that has undergone randomization processing;
the processing module is configured to generate a fourth signal, wherein the fourth signal comprises a signal obtained by transforming the third signal; and
the communication module is configured to output the fourth signal, wherein the fourth signal comprises a signal output by a first antenna corresponding to the second node and a signal output by a second antenna corresponding to the communication apparatus.

32. The apparatus according to claim 31, wherein the third signal is a signal obtained by transmitting a first sensing signal flow and a second sensing signal flow through the channel, the first signal is jointly sent by the first node to the second node through a plurality of antennas, the first signal comprises the first sensing signal flow and the second sensing signal flow, the first sensing signal flow is a random signal flow, and the second sensing signal flow is determined based on the first sensing signal flow and a lowpass function.

33. The apparatus according to claim 32, wherein a modulus value of the first sensing signal flow is equal to a modulus value of the second sensing signal flow.

34. The apparatus according to any one of claims 31 to 33, wherein the fourth signal is obtained by performing conjugate transpose on the third signal.

35. The apparatus according to any one of claims 31 to 33, wherein the fourth signal is obtained by sequentially performing fast Fourier transform FFT, conjugation, and inverse fast Fourier transform IFFT on the third signal.

36. The apparatus according to claim 35, wherein the first signal is sent by the first node through a single antenna, and the first signal is a random signal flow.

37. The apparatus according to claim 36, wherein the third signal comprises a fifth signal and a sixth signal, the fourth signal comprises a seventh signal and an eighth signal, the seventh signal is obtained by performing conjugate transpose on the fifth signal, and the eighth signal is obtained by sequentially performing conjugate transpose and addition of a time domain offset $n_0$ on the sixth signal, wherein $n_0$ is a sampling value of a lowpass function in a time unit for sending the first signal.

38. The apparatus according to claim 36, wherein the third signal comprises a fifth signal and a sixth signal, the fourth signal comprises a seventh signal and an eighth signal, the seventh signal is obtained by sequentially performing fast Fourier transform FFT, conjugation in frequency domain, and inverse fast Fourier transform IFFT on the fifth signal, and the eighth signal is obtained by sequentially performing fast Fourier transform FFT, conjugation in frequency domain, multiplication by a phase rotation factor $e^{-j\frac{2\pi}{N}kn_0}$, and inverse fast Fourier transform IFFT on the sixth signal, wherein $n_0$ is a sampling value of a lowpass function in a time unit for sending the first signal, k represents a subcarrier sequence number, and N represents a quantity of subcarriers.

39. The apparatus according to claim 36, wherein the third signal comprises a fifth signal and a sixth signal, the fourth signal comprises a seventh signal and an eighth signal, the seventh signal is obtained by estimating a frequency-domain synthetic channel based on the fifth signal and performing conjugation on the fifth signal, and the eighth signal is obtained by estimating a frequency-domain synthetic channel based on the sixth signal and sequentially performing conjugation and multiplication by a rotation factor $e^{-j\frac{2\pi}{N}kn_0}$ on the sixth signal, wherein $n_0$ is a sampling value of a lowpass function in a time unit for sending the first signal, k represents a subcarrier sequence number, and N represents a quantity of subcarriers.

40. The apparatus according to any one of claims 37 to 39, wherein a value range of $n_0$ is between two constants greater than zero, and the two constants are determined based on N and k.

41. A communication apparatus, wherein the communication apparatus comprises a processor, and the processor is configured to run a computer program or instructions or is configured to enable, using a logic circuit, the communication apparatus to perform the method according to any one of claims 1 to 10 or enable the communication apparatus to perform the method according to any one of claims 11 to 20.

42. The apparatus according to claim 41, wherein the apparatus further comprises a communication interface configured to input and/or output a signal.

43. The apparatus according to claim 41 or 42, wherein the apparatus further comprises a memory configured to store the computer program or instructions.

44. A computer-readable storage medium, wherein the computer-readable storage medium stores computer instructions or a program, and when the computer instructions or the program is run on a computer, the communication apparatus is enabled to perform the method according to any one of claims 1 to 10, or the communication apparatus is enabled to perform the method according to any one of claims 11 to 20.

45. A computer program product, wherein the computer program product comprises computer instructions, and when a part or all of the computer instructions are run, the communication apparatus is enabled to perform the method according to any one of claims 1 to 10, or the communication apparatus is enabled to perform the method according to any one of claims 11 to 20.

46. A communication system, wherein the communication system comprises the communication apparatus according to any one of claims 21 to 30 and the communication apparatus according to any one of claims 31 to 40.

EP 4 716 262 A1

FIG. 1

FIG. 2

30

| First node | | Second node |
|---|---|---|
| First signal | S310 → | Third signal |
| | | Transform |
| Second signal | ← S320 | Fourth signal |
| S330: Process the second signal to determine a wireless sensing result | | |

FIG. 3

FIG. 4

Flow
mapping
matrix P1

Pilot
symbol

Flow
mapping
matrix P

| Randomization matrix | CSD | Spatial mapping (precoding) | IFFT |

IFFT

FIG. 5

Processing module 610

Storage module 630

Communication module 620

Communication apparatus 600

FIG. 6

Communication apparatus 700

701

Processor

Instructions

703

Memory

Instructions

Transceiver

702

Radio frequency circuit

Antenna

FIG. 7

## INTERNATIONAL SEARCH REPORT

| International application No. |
| --- |
| **PCT/CN2023/101545** |

### A. CLASSIFICATION OF SUBJECT MATTER

H04W 12/00(2021.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, VEN, WOTXT, EPTXT, USTXT, CNKI, 3GPP: 无线, 感知, 随机, 处理, wireless, sensing, random, process

### C. DOCUMENTS CONSIDERED TO BE RELEVANT

| Category* | Citation of document, with indication, where appropriate, of the relevant passages | Relevant to claim No. |
| --- | --- | --- |
| X | CN 115484682 A (BEIJING UNIVERSITY OF POSTS AND TELECOMMUNICATIONS) 16 December 2022 (2022-12-16) description, paragraphs [0059]-[0098], and figure 2 | 1-46 |
| A | CN 115515175 A (HUAWEI TECHNOLOGIES CO., LTD.) 23 December 2022 (2022-12-23) entire document | 1-46 |
| A | CN 109451430 A (HUAWEI TECHNOLOGIES CO., LTD.) 08 March 2019 (2019-03-08) entire document | 1-46 |
| A | CN 115767572 A (HUAWEI TECHNOLOGIES CO., LTD.) 07 March 2023 (2023-03-07) entire document | 1-46 |
| A | CN 114726697 A (BEIJING UNIVERSITY OF POSTS AND TELECOMMUNICATIONS) 08 July 2022 (2022-07-08) entire document | 1-46 |
| A | US 2023116477 A1 (QUALCOMM INC.) 13 April 2023 (2023-04-13) entire document | 1-46 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 December 2023** | **11 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/101545**

| Patent document cited in search report | | | Publication date (day/month/year) | Patent family member(s) | Publication date (day/month/year) |
|---|---|---|---|---|---|
| CN | 115484682 | A | 16 December 2022 | None | |
| CN | 115515175 | A | 23 December 2022 | None | |
| CN | 109451430 | A | 08 March 2019 | None | |
| CN | 115767572 | A | 07 March 2023 | None | |
| CN | 114726697 | A | 08 July 2022 | None | |
| US | 2023116477 | A1 | 13 April 2023 | None | |

Form PCT/ISA/210 (patent family annex) (July 2022)